# EUROPÄISCHE PATENTSCHRIFT

(11) **EP 2 554 573 B1**
(45) Veröffentlichungstag und Bekanntmachung des Hinweises auf die Patenterteilung: **04.10.2017**
(21) Anmeldenummer: 12174712.5
(22) Anmeldetag: 03.07.2012
(51) Int. Cl.: C08G 77/46, C08L 75/04, C08G 18/48, C08G 18/76, C08J 9/12

(54) **Alkylcarbonat endverschlossene Polyethersiloxane und Verfahren zu deren Herstellung**
Alkyl carbonate end-capped polyethersiloxanes and method for its manufacture
Siloxane de polyéther fermé à son extrémité par du carbonate d'alkyle et son procédé de fabrication

(30) Priorität: 03.08.2011 DE 102011109540
(43) Veröffentlichungstag der Anmeldung: 06.02.2013
(73) Patentinhaber: Evonik Degussa GmbH, 45128 Essen (DE)
(72) Erfinder: Knott, Wilfried, Dr., 45355 Essen (DE); Dudzik, Horst, 45326 Essen (DE); Henning, Frauke, Dr., 45259 Essen (DE); Schubert, Frank, Dr., 47506 Neukirchen-Vluyn (DE); Ferenz, Michael, Dr., 45147 Essen (DE); Hubel, Roland, Dr., 45136 Essen (DE)

(56) Entgegenhaltungen:
- DE-C1- 3 724 716
- US-A1- 2010 286 295
- US-A1- 2010 298 455

## Beschreibung

Gegenstand der vorliegenden Erfindung sind nach Maßgabe der Ansprüche 1 - 16 Polysiloxanpolyether-Copolymere, die mindestens einen Polyether-Rest aufweisen, dadurch gekennzeichnet, dass mindestens ein Polyether-Rest vorhanden ist, der als Abschluss mindestens einen Baustein -O-C(O)-O-R" aufweist, mit R" = gleiche oder verschiedene Alkylreste, ein Verfahren zu deren Herstellung und deren Verwendung, insbesondere zur Polyurethanschaumherstellung.

Organomodifizierte Siloxane, insbesondere Polyethersiloxane, sind vielfach eingesetzte Verbindungen in nahezu allen Bereichen, in denen es um die Steuerung grenzflächenaktiven Verhaltens geht. Derartige Substanzen werden zum Beispiel als Tenside, Emulgatoren, Dispergiermittel, Lackverlaufsadditive, Schmiermittel, Entschäumer, als Hilfsmittel bei der tertiären Erdölförderung, als Textilhilfsmittel zum Avivieren von Fasern, Garnen oder flächigen Textilprodukten oder als Schaumstabilisatoren bei der Polyurethanverschäumung eingesetzt. Die Anwendungsbreite dieser Stoffklasse beruht nicht zuletzt auf der Möglichkeit durch die geeignete Kombination von Siloxangerüst und Polyethern als Substituenten, neben der Hydrophil/Hydrophob-Balance andere Wirkprinzipien gezielt einzustellen.

Besondere Beachtung verdienen die Polysiloxan-Polyoxyalkylen-Copolymeren, die modifizierte Polyoxyalkylenbausteine enthalten als Additiv bei der Herstellung von Polyurethanschäumen. Diese Schaumstabilisatoren ermöglichen beispielsweise die Ausprägung einer gleichmäßigen Porenstruktur und stabilisieren die Polymermatrix während der Schaumherstellung. Die Effektivität eines Polysiloxan-Polyoxyalkylen-Copolymeren bei der Schaumstabilisierung kann nur in eingeschränktem Maße vorausgesagt werden.

Die Polyether-Polysiloxan-Copolymere lassen sich grundsätzlich in zwei Klassen einteilen. Seit langem sind Polyether-Polysiloxan-Copolymere bekannt, bei denen die Polyether über eine SiOC-Bindung an die Polysiloxankette geknüpft sind. Die Herstellung erfolgt durch Umsetzung von hydroxyfunktionellen Polyethern wahlweise mit Chlorsiloxanen in einer Substitutionsreaktion oder mit Alkoxysiloxanen in einer Umesterungsreaktion. Diese Produktgruppe zeichnet sich besonders vorteilhaft durch ein breites Verarbeitungsspiel und eine hohe Aktivität aus, d.h. in einem weiten Konzentrationsbereich des Stabilisators werden Polyurethanschaumstoffe mit feiner Zellstruktur, der gewünschten Offen-/Geschlossenzelligkeit und frei von Schaumdefekten erhalten. PU-Stabilisatoren der SiOC-Produktgruppe sind aufgrund dieser Eigenschaften breit in einer Vielzahl von Formulierungen einsetzbar. Nachteilig ist die eingeschränkte Hydrolysebeständigkeit der SiOC-Bindung, was dazu führt, dass die Stabilisatoren sowie insbesondere deren Abmischungen oder Formulierungen nicht lange gelagert werden können. Ein weiterer Nachteil der SiOC-Stabilisatoren ist ihre mäßige Löslichkeit in Polyolformulierungen, wodurch es zur Eintrübung oder gar zu Separationserscheinungen der vollständig formulierten Polyolrezeptur kommen kann. Dieses Problem tritt insbesondere bei Hartschaumanwendungen auf, bei denen vielfach eine Löslichkeit und Separationsbeständigkeit von vorformulierten Mischungen enthaltend Polyole, Katalysatoren, Wasser/Treibmittel, dem Schaumstabilisator und ggf. weiteren Additiven, die als gebrauchsfertige Polyurethanschaum-Systeme vermarktet werden, gefordert wird.

Um der mangelnden Lagerstabilität zu begegnen, wurde eine zweite Klasse von Polyether-Polysiloxan-Copolymeren entwickelt, bei der die Polyether durch hydrolysestabile SiC-Bindungen an das Polysiloxan gebunden sind. Die Herstellung erfolgt mittels edelmetallkatalysierter Hydrosilylierung von Allylpolyethern mit Wasserstoffsiloxanen. PU-Stabilisatoren der SiC-Produktgruppe zeichnen sich zusätzlich zu ihrer sehr guten Lagerstabilität durch eine hohe Löslichkeit in Polyolformulierungen aus. Beim Einsatz in Heißweichschaum-Anwendungen ist das von SiOC-Stabilisatoren bekannte breite Verarbeitungsspiel jedoch nicht gegeben, denn die Einsatzmenge des Stabilisators muss innerhalb eines engen Bereichs konstant gehalten werden, um konstant gute Schaumeigenschaften zu erzielen.

Die heute praktizierte Standardreaktion zur hydrolysestabilen Organomodifizierung von Wasserstoffsiloxanen ist die Platinmetall-katalysierte Hydrosilylierung. Die technische Synthese Si-C verknüpfter Polyethersiloxane stützt sich in beträchtlichem Umfang auf die Verwendung der leicht zugänglichen Allyl- bzw. Vinylpolyether.

Der Polyoxyalkylenblock kann bezüglich seiner Zusammensetzung aus den Oxyalkyleneinheiten verändert werden, insbesondere sind Oxyethylen, Oxypropylen und Oxybutylen zu nennen. Die Begrifflichkeit der Zusammensetzung erfasst neben der relativen Anzahl der in ihr vertretenen Oxyalkyleneinheiten auch deren Verteilung bzw. Anordnung in den Polyetherketten. Als weitere Charakteristika sind das Molekulargewicht und die Endgruppe des Polyoxyalkylenblocks zu nennen.

Bei den in kommerziellen Polyurethanweichschaumstabilisatoren eingebauten Polyoxyalkylenen üblichen Endgruppen handelt es sich im Wesentlichen um die Hydroxyfunktionalität, die Methylethergruppe, die Butylethergruppe oder auch die Acetatfunktion.

Nun sind seit einigen Jahren Polyurethanverschäumungen auf dem Vormarsch, die sich der Nutzung hochgespannten Kohlendioxids als Treibgas bedienen. Diese Technologie wird beispielsweise in der EP-A-0 645 226 beschrieben. Das Charakteristikum dieser Verschäumungstechnologie liegt darin, dass das spontan einsetzende Aufschäumen des unter Druck stehenden CO₂ beim Austrag der PU-Reaktionsmischung erhöhte Anforderungen an die Zellbildungscharakteristik der in der Schaumformulierung enthaltenen Komponenten stellt. Dieses lässt sich einfach verstehen, da die konventionelle PU-Verschäumung von der langsam einsetzenden Isocyanat-Wasser-Reaktion geprägt ist, bei der es nur zu einer langsamen CO₂-Gassättigung der flüssigen Polymerphase und in Folge zu einer zögerlichen Ausbildung von Gasblasen kommt.

Der Fachmann sieht sich in derartigen Systemen der technischen Herausforderung gegenüber, trotz des in Sekundenbruchteilen erfolgenden Ausgasens verdampfenden Kohlendioxids, die Zellenzahl und die Zellgrößenverteilung als Parameter der späteren Schaummorphologie und der daraus erwachsenden Schaumeigenschaften steuern zu müssen. Typische Fehlerbilder bei unzulänglicher Prozesssteuerung sind ungleichmäßige teilweise vergröberte Zellen innerhalb der Schaumstruktur.

Wege zur Minimierung dieser Fehlerbilder liegen z. B. in der Auswahl geeigneter Polyether-Polysiloxan-Copolymere als Schaumstabilisatoren, wie sie z.B. in den Patentschriften US-A-5,357,018 oder US-A-5,321,051 beschrieben werden, oder aber auch im Zusatz von cyclischen organischen Carbonaten bei der Polyurethanschaumherstellung insbesondere in Polyurethan-Polyether-Weichschaumformulierungen, wie die Lehre der EP 0 900 811 ausführt.

Die EP 0 798 327 beschreibt einen Prozess für die Herstellung von Polycarbonat-Co-Polyetherdiolen in Form eines Zweistufenprozesses. In einem ersten Schritt wird ein Polyetherglycol mit Bisdimethylcarbonat in Anwesenheit eines basischen Katalysators zu einem Polyetherdiol-bisdimethylcarbonat umgesetzt um in einem anschließenden zweiten Schritt, nach destillativer Entfernung des Überschusses an Dimethylcarbonat und Entfernung des basischen Katalysators, durch sauer katalysierte Umesterung in einen Polycarbonat-Co-Polyetherdiolen überführt zu werden. Nachteilig ist hier die Aufarbeitung des Zwischenschritts und die Notwendigkeit das Katalysatorsystem zu wechseln.

Die US 5,525,640 beschäftigt sich ebenfalls mit Silicon-basierten Netzmitteln und deren Verwendung in mit Inertgasen getriebenem Polyurethanschaum. Kerngedanke der Lehre dieser Schrift ist, dass ein unter Inertgasdruck stehender Polyurethanschaum idealerweise mit einem Polyethersiloxan kammartiger Struktur zu stabilisieren sei, dessen Ethylenoxidanteil im Polyether weniger als 37% vom gesamten Alkylenoxid-Anteil ausmacht. Gestützt wird die Lehre durch vergleichende Verschäumungsversuche im Schlagschaum- aber auch Flüssig-CO₂-getriebenen Schaumsystem an vollständig mit Acetoxy- bzw. Methylgruppen verschlossenen, kammartigen Polyethersiloxanen. Als alternative, die Polyoxyalkylenzweige verschließende Endgruppen werden -C(O)Z', -C(O)OZ" oder -C(O)NHZ' beansprucht, wobei Z' monofunktionelle Alkyl- oder Arylgruppen von 1 bis 8 Kohlenstoffatomen umfasst. Eine besondere Bedeutung wird diesen Endgruppen nicht beigemessen, was sich auch darin manifestiert, dass der Acetat- und der Methyl-Endverschluß bevorzugt werden.

Die WO03/091320 befasst sich mit Silicon-basierten Netzmitteln, die besonders geeeignet sind, CO₂-getriebenen Polyurethanschaum bei feiner Zellstruktur flammhemmend auszustatten. Die Lehre der US 5,525,640 noch einmal aufgreifend, werden wieder kammartige Polyethersiloxane beansprucht, deren Ethylenoxidanteil im Polyether weniger als 37% vom gesamten Alkylenoxid-Anteil ausmacht und die neben den speziell beanspruchten Endverkappungen mit Acetat- und Methylgruppen im Polyoxyalkylenteil auch -C(O)Z', -CC(O)OZ' oder -C(O)NHZ' beansprucht, wobei Z¹ monofunktionelle Alkyl oder Arylgruppen von 1 bis 8 Kohlenstoffatomen umfasst.

Gleichfalls wird auch in der US 2010/0286295, die sich mit Silicon-basierten Netzmitteln für den Einsatz in von Pflanzenöl-Polyetherolen abgeleiteten Polyurethanschäumen beschäftigt und die das besondere Strukturprinzip Alkylgruppen aufweisender Siliconpolyether beansprucht, wiederum die in WO03/091320 aufgezeigte Möglichkeit des Organocarbonat-Endverschlusses beschrieben. Bevorzugt wird als Endverschluss wiederum ein Acetat- oder Methyl-Endverschluß verwendet.

Trotz des bisher erzielten Fortschritts gebricht es den zur Verfügung stehenden Systemen oft noch an einer deutlichen Verbesserung der Zellstruktur von Polyurethanen in kritischen Formulierungen oder bei der Verschäumung mit flüssigen, unter Druck stehenden Gasen.

Aufgabe der vorliegenden Erfindung war es daher, alternative Schaumstabilisatoren bereitzustellen, die vorzugsweise einen oder mehrere der Nachteile der aus dem Stand der Technik bekannten Schaumstabilisatoren überwinden und die bevorzugt eine gute Performance insbesondere bei der Herstellung von PolyurethanWeichschaumsystemen und/oder bei einer Verschäumung mit flüssigen, unter Druck stehenden Gasen aufweisen.

Überraschenderweise wurde nun gefunden, dass Polysiloxan-Polyoxyalkylen-Copolymere der Formel (I) wie in Anspruch 1 definiert, die als Abschluss eine Organocarbonatfunktion aufweisen, diese Aufgabe lösen.

Gegenstand der vorliegenden Erfindung sind deshalb Polysiloxanpolyether-Copolymere wie in Anspruch 1 definiert, die mindestens einen (Polyether-)Rest aufweisen, welche dadurch gekennzeichnet sind, dass mindestens ein Polyether-)Rest vorhanden ist, der als Abschluss mindestens einen Baustein -O-C(O)-O-R" aufweist, mit R" = gleiche oder verschiedene Alkylreste.

Ebenfalls Gegenstand der vorliegenden Erfindung ist ein Verfahren zur Herstellung von Polysiloxanpolyether-Copolymeren, welches dadurch gekennzeichnet ist, dass ein mindestens eine SiH-Funktion oder eine SiZ-Funktion, mit Z = Halogenatom, aufweisendes Polyorganosiloxan mit mindestens einer organischen Verbindung, die mindestens eine Carbonat-Funktion und mindestens eine weitere zur Reaktion mit einer SiH-Funktion oder einer SiZ-Funktion befähigte Gruppe aufweist, umgesetzt wird und/oder zunächst mit einer organischen Verbindung, die eine OH-Funktion und mindestens eine zur Reaktion mit einer SiH-Funktion oder einer SiZ-Funktion befähigte Gruppe aufweist, umgesetzt wird und anschließend mit einem Dialkylcarbonat umgesetzt wird.

Außerdem ist Gegenstand der vorliegenden Erfindung die Verwendung von erfindungsgemäßen Polysiloxanpolyether-Copolymeren oder erfindungsgemäße hergestellte Polysiloxanpolyether-Copolymeren als Schaumstabilisatoren bei der Herstellung von Polyurethanschäumen, bei der Herstellung von Polyurethan-basierten Kunststoffen, als Tenside für flüssig-CO₂-Extraktion, als oberflächenaktive Substanz für dry-cleaning oder als Emulgator für kosmetische Anwendungen.

Der Einsatz der erfindungsgemäßen Polysiloxanpolyether-Copolymeren als Schaumstabilisatoren hat den Vorteil, dass die Verschäumungszusammensetzung eine deutlich höhere CO₂-Löslichkeit aufweist. Diese erhöhte CO₂-Löslichkeit zeigt sich bei der Herstellung von Polyurethanweichschäumen daran, dass mit Organocarbonatfunktionen verschlossene erfindungsgemäße Polyethersiloxane gegenüber analog strukturierten Polyethersiloxan-Copolymeren, die sich von diesen nur durch den Methyl-Endverschluss unterscheiden, eine deutlich erhöhte Tendenz zur Schaumöffnung bis sogar hin zum Schaumkollaps zeigen. Die im Rahmen der hier beanspruchten erfinderischen Lehre offenbarten Verschäumungsergebnisse belegen eindrucksvoll den steuernden Einfluss des jeweiligen Polyetherendverschlusses. Der im nichterfindungsgemäßen Vergleichsbeispiel 1 gewählte Siliconpolyether besitzt sowohl Hydroxylendgruppen als auch Methylendgruppen in seinen Polyoxyalkylenzweigen. Der Methylendverschluß ist mit 75 Val-% vertreten. Wird dieser Weichschaumstabilisator mit einer Einsatzkonzentration von 0,5 Teilen einer PU-Weichschaummatrix zugesetzt, beobachtet man einen Rückfall in Höhe von 1,3 cm Im Ausführungsbeispiel 3 reicht bereits ein Anteil von 46 Val-% Ethylcarbonatgruppen (bezogen auf die Summe aus Hydroxyl- und Ethylcarbonatgruppen gleich 100 Val%), bei ansonsten gleicher Copolymerstruktur, um einen Schaumkollaps zu erzeugen.

Im Falle des strukturanalogen Ethylcarbonat-endverschlossenen Polyethersiloxans des Ausführungsbeispiels 5 führt der hier realisierte Endverschlussgrad von 86,2 Val% in allen gewählten Einsatzkonzentrationen (1,0 Teile, 0,6 Teile und 0,5 Teile) zu einem Schaumkollaps. Diese durch den partiellen Alkylcarbonat-Einbau in die Siloconpolyetherstruktur hineingetragene Eigenschaft gewährt dem Fachmann in der PU-Schaumherstellung die Option, ein systemadaptiertes Rezepturspiel zwischen Schaumstabilisierung und Zellöffnung einzustellen.

Die Versuche zeigen, dass bei Carbonatendverschlossenen Polysiloxanpolyethern ein geringerer Grad an Endverschluss als z.B. bei Methyl-endverkappten Polysiloxanpolyethern ausreichend ist, um eine im Wesentlichen gleiche Wirkung als Schaumstabilisator zu erzielen.

In der Synthese von Polyethersiloxan basierten PU-Weichschaumstabilisatoren bietet die erfinderische Lehre dem Fachmann darüber hinaus auch die Möglichkeit, solche Copolymere, die tendenziell zu stark stabilisieren und in Konsequenz den PU-Schaum zu stark schließen (Schrumpfneigung) durch den gezielten, gegebenenfalls nachträglichen Einbau von Alkylcarbonat-Endgruppen auszubalancieren.

Werden die Alkylcarbonat-endverschlossenen Polyethersiloxane gemischt zusammen mit Polyoxyalkylenalkoholen (Polyethern) eingesetzt, so lässt sich durch den Fachmann in einfachen Experimenten der optimale Konzentrationsbereich der Komponenten bestimmen um eine gewünschte Zellstruktur eines Polyurethanschaum erzeugen zu können. Dabei ist das Ergebnis unabhängig davon, ob die Alkylcarbonat-endverschlossenen Polyethersiloxane mit Polyethern nachträglich gemischt werden oder ob teilweise endverschlossene Alkylcarbonat-endverschlossene Polyethersiloxane unter Anwendung eines zuvor bestimmten Überschusses an Polyethern mit dem erfindungsgemäßen Verfahren hergestellt werden.

Die erfindungsgemäßen Carbonat-endverkappten Polysiloxanpolyether-Copolymeren haben somit den Vorteil, dass sie zu einem geringeren Grad endverkappt werden müssen, wodurch eine Einsparung von Energie und Rohstoffen erzielt werden kann.

Die Carbonat-Endverkappung hat des Weiteren den Vorteil, dass das zur Endverkappung eingesetzte Reagenz (Dimethylcarbonat), weniger gefährlich bzw. Material schädigend ist als die zur Methyl- bzw. Acetyl-Endverkappung eingesetzten Reagenzien, insbesondere Dimethylsulfat oder Methylchlorid.

Die erfindungsgemäßen Polysiloxanpolyether-Copolymeren, deren Herstellung, sowie deren Verwendung werden nachfolgend beispielhaft beschrieben, ohne dass die Erfindung auf diese beispielhaften Ausführungsformen beschränkt sein soll. Sind nachfolgend Bereiche, allgemeine Formeln oder Verbindungsklassen angegeben, so sollen diese nicht nur die entsprechenden Bereiche oder Gruppen von Verbindungen umfassen, die explizit erwähnt sind, sondern auch alle Teilbereiche und Teilgruppen von Verbindungen, die durch Herausnahme von einzelnen Werten (Bereichen) oder Verbindungen erhalten werden können. Werden im Rahmen der vorliegenden Beschreibung Dokumente zitiert, so soll deren Inhalt vollständig zum Offenbarungsgehalt der vorliegenden Erfindung gehören. Werden nachfolgend %-Angaben gemacht, so handelt es sich, wenn nicht anders angegeben, um Angaben in Gewichts-%. Bei Zusammensetzungen beziehen sich die %-Angaben, wenn nicht anders angegeben, auf die Gesamtzusammensetzung. Werden nachfolgend Mittelwerte angegeben, so handelt es sich, wenn nicht anders angegeben um Zahlenmittel. Werden nachfolgend Messwerte angegeben, so wurden diese Messwerte, wenn nicht anders angegeben, bei einem Druck von 101325 Pa und einer Temperatur von 23°C ermittelt.

Die erfindungsgemäßen Polysiloxanpolyether-Copolymere die mindestens einen (Polyether-)Rest aufweisen, zeichnen sich dadurch aus, dass mindestens ein Polyether-)Rest vorhanden ist, der als Abschluss mindestens einen Baustein -O-C(O)-O-R" aufweist, mit R" = gleiche oder verschiedene Alkylreste.

Die erfindungsgemäßen Polysiloxanpolyether-Copolymeren genügen der Formel (I): 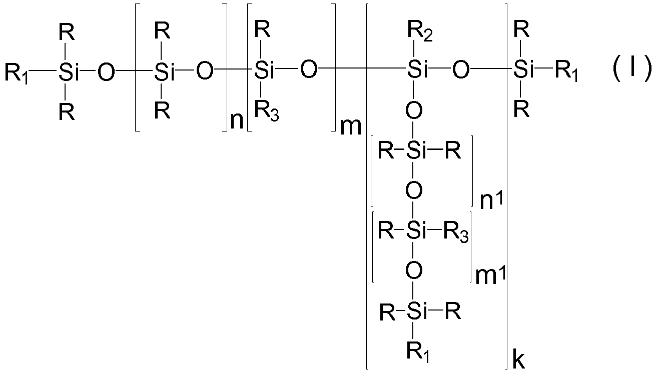 worin
n und n¹ unabhängig voneinander 0 bis 500, vorzugsweise 10 bis 200, insbesondere 15 bis 100 sind und (n+n¹) ≤ 500, vorzugsweise ≤ 200, insbesondere von > 0 bis ≤ 100 ist, m und m¹ unabhängig voneinander 0 bis 60, vorzugsweise 0 bis 30, insbesondere 0,1 bis 25 sind und (m+m1) ≤ 60 ist, vorzugsweise ≤ 30, insbesondere von > 0 bis ≤ 25 ist, k = 0 bis 50 ist, vorzugsweise 0 bis 10 ist, insbesondere 0 oder von 1 bis 5 ist,
wobei R ein Methylrest ist,
R₁ unabhängig voneinander R oder R₃ oder R₇ ist,
R₂ unabhängig voneinander R oder R₃ oder R₇ oder ein mit Heteroatomen substituierter, funktioneller, organischer, gesättigter oder ungesättigter Rest, vorzugsweise ausgesucht aus der Gruppe der Alkyl-, Chloralkyl-, Chloraryl-, Fluoralkyl-, Cyanoalkyl-, Acryloxyaryl-, Acryloxyalkyl-, Methacryloxyalkyl-, Methacryloxypropyl- oder Vinyl-Reste, besonders bevorzugt ein Methyl-, Chlorpropyl-, Vinyl- oder ein Methacryloxypropyl-Rest ist,
R₃ gleich oder verschieden ein Rest der Formel (Va) oder (Vb)

   -Qₗ-X-(R₈X-)_{w}-(CH₂-CH₂O-)ₓ-(C(O)-O)ₚ-(CH₂-CH(R')O-)_{y}- (C(O)-O-R" (Va)

   oder

   -Qₗ-X-(R₈X-)_{w}-(CH₂-CH₂O-)ₓ-(CH₂-CH(R')O-)_{y}-R"" (Vb)

   mit
   l = 0 oder 1,
   X = unabhängig voneinander NR^{Z}, O oder S, vorzugsweise NR^{z} oder O,
   R^{Z} = gleich oder verschieden H oder Alkylrest, vorzugsweise H,
   Q = zweiwertiger Kohlenwasserstoffrest mit 2 bis 6 Kohlenstoffatomen, vorzugsweise
   Q = -CH₂-CH₂-CH₂- oder -CH₂-CH₂-
   R₈ gleich oder verschieden verzweigter oder unverzweigter, cyclischer, gesättigter, ungesättigter Kohlenwasserstoffrest mit einer mindestens 2 Kohlenstoffatome aufweisenden Kohlenstoffkette zwischen den durch den Kohlenwasserstoffrest verbundenen Heteroatomen X, vorzugsweise ein linearer Kohlenwasserstoffrest -CⱼH₂ⱼ-mit j ≥ 2, vorzugsweise j = 4 bis 12, bevorzugt j = 6 bis 10,
   w = 0 bis 200, vorzugsweise 1 bis 150, bevorzugt 3 bis 20,
   x = 0 bis 200, vorzugsweise 5 bis 140, bevorzugt 10 bis 100,
   y = 0 bis 200, vorzugsweise 5 bis 140, bevorzugt 10 bis 100,
   p = 0 bis 100, vorzugsweise 0 oder 1 bis 20, bevorzugt 0 oder 2 bis 10
   wobei die mit den Indizes w, x, y und p versehenen Bausteine blockweise oder statistisch verteilt angeordnet sein können,
   R' = gleiche oder verschiedene, unsubstituierte oder gegebenenfalls substituierte, beispielsweise mit Alkylresten, Arylresten oder Halogenalkyl- oder Halogenarylresten substituierte, Alkyl- oder Arylgruppe mit insgesamt 1 bis 12 C-Atomen, vorzugsweise eine Methyl- oder Ethylgruppe, bevorzugt eine Methylgruppe und
   R" = gleich oder verschieden eine Alkylgruppe, vorzugsweise mit 1 bis 30 C-Atomen, bevorzugt ein Methylrest oder Ethylrest, besonders bevorzugt ein Methylrest,
   R"" = gleich oder verschieden ein Wasserstoffrest, eine Alkylgruppe mit 1 bis 30 C-Atomen, eine Gruppe -C(O)-R"' mit R"' = Alkylrest, eine Gruppe -CH2-O-R', eine Alkylarylgruppe, wie z. B. eine Benzylgruppe, eine Gruppe -C(O)-O-R"" mit R"" = Alkylrest oder Alkylaryl, die Gruppe -C(O)-OR' oder die Gruppe -C(O)NH-R', vorzugsweise ein Alkyl-, insbesondere Methyl-, oder Acetylrest,
   R₇ = Vernetzerrest, der z. B. ein durch Hydrosilylierung und/oder dehydrogenative Kondensation angebundener, organischer Rest sein kann, der wiederum an einen Polysiloxanrest gebunden sein kann,
   mit der Maßgabe, dass mindestens ein Rest R₃ vorhanden ist, der der Formel (Va) genügt.

Vorzugsweise weist das erfindungsgemäße Polysiloxanpolyether-Copolymer der Formel (I) keinen Rest R⁷ auf.

Bevorzugte erfindungsgemäße Polysiloxanpolyether-Copolymer der Formel (I) sind solche, bei denen n und n¹ unabhängig voneinander 3 bis 147 sind und (n+n¹) ≤ 150 ist, k 0 oder von 1 bis 5 ist,
R = ein Methylrest ist,
R₁ = R oder R₃,
R₂ = R oder R₃ oder ein Chlorpropyl-, Vinyl- oder ein Methacryloxypropyl-Rest ist, und mindestens ein Rest R₃ vorhanden ist, der gleich oder verschieden -Qₗ-X-(R₈X-)_{w}-(CH₂-CH₂O-)ₓ-(CH₂-CH(R')O-)_{y}-(C(O)-O)ₚ-R" ist, mit l=0 oder l = 1 und Q = -CH₂-CH₂-CH₂-,
R₈ = ein linearer Kohlenwasserstoffrest -CⱼH₂ⱼ- mit j = 4 bis 12,
w = 0 oder 1 bis 100,
x = 0 oder 5 bis 140,
y = 0 oder 5 bis 140, mit der Maßgabe, dass die Summe x + y ≥ 5 ist,
p = 1 bis 10,
R' = gleich oder verschieden eine Phenyl-, Methyl- oder Ethylgruppe, bevorzugt eine Methylgruppe und R" einen Wasserstoffrest oder einen Methyl-, Butyl- oder Acetylrest bedeutet.

Die erfindungsgemäßen Polysiloxanpolyether-Copolymeren können ausschließlich Polyetherreste aufweisen, die als Abschluss mindestens einen Baustein -O-C(O)-O-R" aufweisen, insbesondere solche Polyetherreste der Formel (Va) oder aber sowohl Polyetherreste aufweisen, die als Abschluss mindestens einen Baustein -O-C(O)-O-R" aufweisen, insbesondere solche Polyetherreste der Formel (Va) als auch Polyetherreste aufweisen, die als Abschluss keinen Baustein -O-C(O)-O-R' aufweisen, insbesondere solche der Formel (Vb).

Es kann vorteilhaft sein, wenn die erfindungsgemäßen Polysiloxanpolyether-Copolymeren als Mischungen vorliegen, in denen Polysiloxanpolyether-Copolymeren vorliegen, die keine Polyetherreste aufweisen, die als Abschluss mindestens einen Baustein -O-C(O)-O-R" aufweisen.

Unabhängig davon, ob die erfindungsgemäßen Polysiloxanpolyether-Copolymeren als Mischung aus erfindungsgemäßen Polysiloxanpolyether-Copolymeren und nicht erfindungsgemäßen Polysiloxanpolyether-Copolymeren vorliegen oder nur Polysiloxanpolyether-Copolymere vorliegen, die sowohl Polyetherreste mit als auch ohne Abschlussbaustein -O-C(O)-O-R" aufweisen, hat es sich als vorteilhaft erwiesen, wenn der molare Anteil der Polyetherreste, die einen Abschlussbaustein -O-C(O)-O-R" aufweisen, in Bezug auf die Gesamtzahl der jeweils in den Polysiloxanpolyether-Copolymeren vorhandenen Polyetherreste von 5 bis 98 mol-%, bevorzugt von 20 bis 75 mol-% und besonders bevorzugt von 35 bis 60 mol-% beträgt.

Es kann vorteilhaft sein, wenn die erfindungsgemäßen Polysiloxanpolyether-Copolymeren in Mischungen mit einem oder mehreren Polyethern vorliegen, die keine Si-Atome aufweisen, vorhanden sind. Bevorzugte Polyether sind insbesondere solche der nachfolgend beschriebenen Formeln IIIa, IIIb, oder IIIc.

Liegen der erfindungsgemäßen Polysiloxanpolyether-Copolymeren in Mischungen mit einem oder mehreren Polyethern vor, so beträgt das Massenverhätlnis von Polysiloxanpolyether-Copolymeren der Formel (I) zu Si-freien Polyethern, insbesondere solchen der Formeln IIIa, IIIb und IIIc, von 60 zu 40 bis 90 zu 10, bevorzugt von 75 zu 25 bis 85 zu 15.

Die erfindungsgemäßen Polysiloxanpolyether-Copolymeren bzw. Mischungen die diese erhalten können auf unterschiedlichste Weise erhalten werden. Vorzugsweise werden die erfindungsgemäßen Polysiloxanpolyether-Copolymeren bzw. Mischungen, die diese enthalten, durch das nachfolgend beschriebene erfindungsgemäße Verfahren erhalten bzw. sind durch dieses erhältlich.

Das erfindungsgemäße Verfahren zur Herstellung von Polysiloxanpolyether-Copolymeren, zeichnet sich dadurch aus, dass ein mindestens eine SiH-Funktion oder eine SiZ-Funktion, mit Z = Halogenatom, aufweisendes Polyorganosiloxan mit mindestens einer organischen Verbindung, die mindestens eine Carbonat-Funktion und mindestens eine weitere zur Reaktion mit einer SiH-Funktion oder einer SiZ-Funktion befähigte Gruppe aufweist, umgesetzt wird und/oder zunächst mit einer organischen Verbindung, die eine OH-Funktion und mindestens eine zur Reaktion mit einer SiH-Funktion oder einer SiZ-Funktion befähigte Gruppe aufweist, umgesetzt wird und anschließend mit einem Dialkylcarbonat umgesetzt wird.

Vorzugsweise werden in dem erfindungsgemäßen Verfahren als organische Verbindungen, die mindestens eine oder eine weitere zur Reaktion mit einer SiH-Funktion oder einer SiZ-Funktion befähigte Gruppe aufweisen, Verbindungen eingesetzt werden, die als zur Reaktion mit einer SiH-Funktion befähigte Gruppe, eine Ethenyl- oder Ethinylendgruppe aufweisen.

Das erfindungsgemäße Verfahren umfasst also die direkte oder indirekte Umsetzung eines eine SiH-Funktion oder eine SiZ-Funktion, mit Z = Halogenatom, aufweisenden Polyorganosiloxans mit mindestens einer organischen Verbindung, die eine Carbonatfunktion aufweist.

Es kann vorteilhaft sein, wenn das erfindungsgemäße Verfahren so durchgeführt wird, dass in den erhaltenen Polysiloxanpolyether-Copolymeren oder in den erhaltenen Mischungen dieser Polysiloxanpolyether-Copolymeren mit nicht erfindungsgemäßen Polysiloxanpolyether-Copolymeren, vorzugsweise in den erhaltenen Polysiloxanpolyether-Copolymeren, der molare Anteil der Polyetherreste, die einen Abschlussbaustein -O-C(O)-O-R" aufweisen, in Bezug auf die Gesamtzahl der jeweils in den Polysiloxanpolyether-Copolymeren vorhandenen Polyetherresten von 5 bis 98 mol-%, bevorzugt von 20 bis 75 mol-% und besonders bevorzugt von 35 bis 60 mol-% beträgt. Dies kann je nach Verfahrensvariante durch das Verhältnis von eingesetzten Carbonatendverkappten Polyether, die eine weitere zur Reaktion mit einer SiH-Funktion oder einer SiZ-Funktion befähigte Gruppe aufweisen, zu eingesetzten nicht endverkappten Polyethern, die eine weitere zur Reaktion mit einer SiH-Funktion oder einer SiZ-Funktion befähigte Gruppe aufweisen, (Variante A) oder durch das eingesetzte molare Verhältnis von OH-Gruppen der Polyetherreste zu organischen Carbonaten eingestellt werden (Variante B).

Als mindestens eine SiH-Funktion oder eine SiZ-Funktion aufweisendes Polyorganosiloxan, können vorzugsweise Polyorganosiloxane mit endständigen und/oder seitenständigen SiH-Funktionen oder SiZ-Funktionen, der Formel (II) eingesetzt werden, 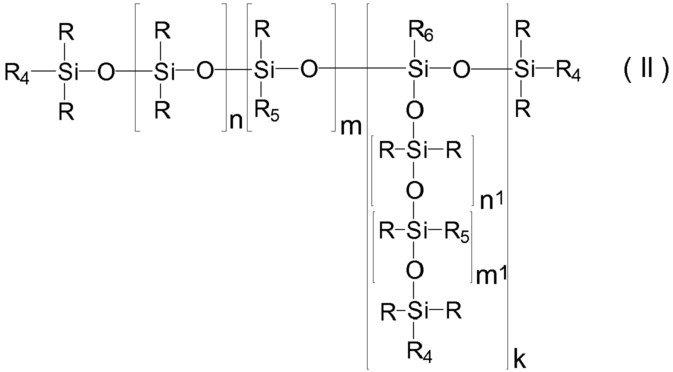 worin
n und n¹ unabhängig voneinander 0 bis 500, vorzugsweise 10 bis 200, insbesondere 15 bis 100 sind und (n+n¹) ≤ 500, vorzugsweise ≤ 200, insbesondere von > 0 bis ≤ 100 ist,
m und m¹ unabhängig voneinander 0 bis 60, vorzugsweise 0 bis 30, insbesondere 0,1 bis 25 sind und (m+m1) ≤ 60, vorzugsweise ≤ 30, insbesondere von > 0 bis ≤ 25 ist,
k = 0 bis 50, vorzugsweise 0 bis 10 und insbesondere 0 oder 1 bis 5 ist,
R wie oben definiert
R₄ unabhängig voneinander Wasserstoff, Z oder R ist,
R₅ unabhängig voneinander Wasserstoff, Z oder R ist,
R₆ unabhängig voneinander Wasserstoff, Z, R oder ein mit Heteroatomen substituierter, funktioneller, organischer, gesättigter oder ungesättigter Rest, vorzugsweise ausgesucht aus der Gruppe der Alkyl-, Chloralkyl-, Chloraryl-, Fluoralkyl-, Cyanoalkyl-, Acryloxyaryl-, Acryloxyalkyl-, Methacryloxyalkyl-, Methacryloxypropyl- oder Vinyl-Reste, besonders bevorzugt ein Chlorpropyl-, Vinyl- oder ein Methacryloxypropyl-Rest ist,
mit der Maßgabe, dass mindestens einer der Reste R₄, R₅ und R₆ ein Wasserstoff oder Z ist.

Vorzugsweise werden als mindestens eine SiH-Funktion oder eine SiZ-Funktion aufweisende Polyorganosiloxane Polyorganosiloxane mit endständigen und/oder seitenständigen SiH-Funktionen oder SiZ-Funktionen, der Formel (II) eingesetzt, bei denen dass n und n¹ unabhängig voneinander 15 bis 100 sind und (n+n¹) ≤ 100 ist, k 0 oder von 1 bis 5 ist, R = ein Methylrest ist, und R₆ = R oder ein Chlorpropyl-, Vinyl- oder ein Methacryloxypropyl-Rest ist.

### Variante A)

Wird das erfindungsgemäße Verfahren zur Herstellung von Polysiloxanpolyether-Copolymeren so durchgeführt, dass eine mindestens eine SiH-Funktion oder eine SiZ-Funktion, mit Z = Halogenatom, aufweisendes Polyorganosiloxan mit mindestens einer organischen Verbindung, die mindestens eine Carbonat-Funktion und mindestens eine weitere zur Reaktion mit einer SiH-Funktion oder einer SiZ-Funktion befähigte Gruppe aufweist, umgesetzt wird, so werden als organische Verbindungen, die mindestens eine Carbonat-Funktion und mindestens eine weitere zur Reaktion mit einer SiH-Funktion oder SiZ-Funktion befähigte Gruppe aufweisen, vorzugsweise Polyether der Formel (IIIa) eingesetzt,

Q'-X-(R₈X-)_{w}-(CH₂-CH₂O-)ₓ-(C(O)-Y)ₚ-(CH₂-CH(R')O-)_{y}-C(O)-O-R" (IIIa)

mit Q' = H oder CH₂=CH-(CH₂)_{q}- oder CH≡C-(CH₂)_{q}- und q = 0 oder 1, vorzugsweise 1, p = 1 bis 100, vorzugsweise 1 bis 10,
Y = unabhängig voneinander NR^{Z}, O oder S, vorzugsweise NR^{Z} oder O, bevorzugt O, R", w, x, y, R₈ und R' wie in den vorangegangenen Ansprüchen definiert.

Diese Polyether können z. B. dadurch erhalten werden, dass primäre oder sekundäre OH-Funktionen aufweisende ungesättigte Polyoxyalkylenverbindungen, speziell Allylpolyetherole, mit einen Organocarbonat, vorzugsweise einem Dialkylcarbonat, wie z.B. Dimethylcarbonat oder Diethylcarbonat, bevorzugt Diethylcarbonat in Gegenwart eines geeigneten basischen Katalysators, vorzugsweise bei Temperaturen über Raumtemperatur zur Umsetzung gebracht werden. Das prinzipielle Verfahren zur Herstellung aliphatischer Oligocarbonatpolyole mit sekundären OH-Gruppen ist beispielsweise in der WO 2006/002787 beschrieben, auf welche ausdrücklich verwiesen wird. Als basische Katalysatoren eignen sich die Carbonate der Alkali- und Erdalkalimetalle, insbesondere Kalium- oder Natriumcarbonat, aber auch z.B. Tetraalkylammoniumhydroxide. Unter einhergehender Freisetzung eines Alkohols entstehen Alkylcarbonat-endverschlossene, ungesättigte Polyoxyalkylenverbindungen, bevorzugt solche der Formel (IIIa). Die Temperatur, bei welcher die Umsetzung durchgeführt wird, beträgt vorzugsweise von 50 bis 250 °C, bevorzugt von 100 bis 200 °C.

Geeignete Polyether, die eine OH-Gruppe aufweisen, und eine Vinyl- oder Ethinylendgruppe aufweisen, können insbesondere auch nach dem literaturbekannten Verfahren der alkalischen Alkoxylierung von einem eine Vinylgruppe aufweisenden Alkohol, insbesondere Allylalkohol, oder unter Verwendung von DMC-Katalysatoren wie im Stand der Technik, beispielsweise in der DE 10 2007 057145 A1, beschrieben, hergestellt werden.

Als Polyether der Formel (IIIa) wird vorzugsweise ein Polyether der Formel (IIIa) eingesetzt, bei dem Q' = CH₂=CH-CH₂-, X und Y jeweils O, R₈ = ein linearer Kohlenwasserstoffrest -CⱼH₂ⱼ- mit j = 4 bis 12, w = 0 oder 1 bis 100, bevorzugt 0, x = 0 oder 5 bis 140, bevorzugt 5 bis 40, y = 0 oder 5 bis 140, mit der Maßgabe, dass die Summe x + y ≥ 5 ist, p = 1 bis 10, R' = eine Methyl- oder Ethylgruppe, bevorzugt eine Methylgruppe und R" einen Methyl- oder Butylrest bedeutet, oder bei dem Q' = H, X und Y jeweils O, R₈ = ein linearer Kohlenwasserstoffrest -CⱼH₂ⱼ- mit j = 4 bis 12, w = 0 oder 1 bis 100, bevorzugt 0, x = 0 oder 5 bis 140, bevorzugt 5 bis 40, y = 0 oder 5 bis 140, mit der Maßgabe, dass die Summe x + y ≥ 5 ist, p = 1 bis 10, R' = eine Methyl- oder Ethylgruppe, bevorzugt eine Methylgruppe und R" einen Wasserstoffrest oder einen Methyl- oder Butylrest bedeutet.

Nach einer optionalen Abtrennung des Alkohols und/oder des alkalischen Katalysators kann diese organischen Verbindungen, die mindestens eine Carbonat-Funktion und mindestens eine weitere zur Reaktion mit einer SiH-Funktion oder einer SiZ-Funktion befähigte Gruppe aufweisen, mit einem mindestens eine SiH-Funktion oder eine SiZ-Funktion, mit Z = Halogenatom, aufweisendes Polyorganosiloxan umgesetzt werden. Die Umsetzung erfolgt vorzugsweise als Hydrosilylierung, bevorzugt als Edelmetall-, insbesondere Platin-katalysierte Umsetzung. Bevorzugt eingesetzte Katalysatoren, wie z. B. der WK-Katalysator, werden beispielsweise in EP 1 520 870 beschrieben.

Um zu erfindungsgemäßen Polysiloxanpolyether-Copolymeren zu gelangen, die sowohl organocarbonat-endverkappte Polyetherreste als auch Polyetherreste, die keine organocarbonat-Endverkappung aufweisen, können auch Mischungen von Polyethern der Formel (IIIa) in Kombination mit solchen der Formeln (IIIb) und/oder (IIIc) eingesetzt werden. Als Polysiloxane müssen dann solche eingesetzt werden, die mehrere SiH- und/oder SiZ-Funktionen, aufweisen. Werden solche Mischungen von Polyethern eingesetzt, so enthalten diese Mischungen vorzugsweise so viele Polyether der Formel (IIIa), dass das molare Verhältnis der Polyether der Formel (IIIa) zu mindestens eine SiH-Funktion oder eine SiZ-Funktion, mit Z = Halogenatom, aufweisendem Polyorganosiloxan 1 : 1, bevorzugt >1 zu 1 beträgt.

Das Mischungsverhältnis der Polyether wird vorzugsweise so gewählt, dass der Anteil der Polyether, die einen Abschlussbaustein -O-C(O)-O-R" aufweisen, in Bezug auf die Gesamtzahl der eingesetzten Polyether von 5 bis 98 mol-%, bevorzugt von 20 bis 75 mol-% und besonders bevorzugt von 35 bis 60 mol-% beträgt.

### Variante B)

Wird das erfindungsgemäße Verfahren so durch geführt, dass eine organische Verbindung, die eine OH-Funktion und mindestens eine zur Reaktion mit einer SiH-Funktion oder einer SiZ-Funktion befähigte Gruppe aufweist, umgesetzt wird und anschließend die OH-Funktion zumindest teilweise mit einem Organocarbonat, insbesondere einem Dialkylcarbonat umgesetzt wird, wird als organische Verbindung vorzugsweise eine Verbindung der Formel (IIIc)

Q'-X-(R₈X-)_{w}-(CH₂-CH₂O-)ₓ-(C(O)-Y)ₚ-(CH₂-CH(R')O-)_{y}-H (IIIc)

eingesetzt, mit Q', p, Y, X, w, x, y, R₈ und R' wie oben definiert, eingesetzt.

Vorzugsweise werden als organische Verbindungen, die eine OH-Funktion und mindestens eine weitere zur Reaktion mit einer SiH-Funktion oder SiZ-Funktion befähigte Gruppe aufweisen, in dem erfindungsgemäßen Verfahren vorzugsweise Polyether der Formel (IIIb) eingesetzt,

Q'-X-(R₈X-)_{w}-(CH₂-CH₂O-)ₓ-(CH₂-CH(R')O-)_{y}-H (IIIb)

mit Q' = H oder CH₂=CH-(CH₂)_{q}- oder CH≡C-(CH₂)_{q}- und q = 0 oder 1, vorzugsweise 1, und X, w, x, y, R₈ und R' wie in den vorangegangenen Ansprüchen definiert.

Die Umsetzung kann nach einem aus dem Stand der Technik bekannten Verfahren, z. B. als Hydrosilylierung erfolgen. Die Umsetzung erfolgt vorzugsweise als Hydrosilylierung, bevorzugt als Edelmetall-, insbesondere Platin-katalysierte Umsetzung. Bevorzugt eingesetzte Katalysatoren, wie z. B. der WK-Katalysator, werden beispielsweise in EP 1 520 870 beschrieben.

Das so erhaltene Polyetherpolysiloxan, welches Polyetherreste mit freien OH-Gruppen aufweist, wird anschließend mit organischen Carbonaten, vorzugsweise den oben genannten Dialkylcarbonaten, bevorzugt in einer alkalisch katalysierten Reaktion umgesetzt. Diese Umsetzung kann wiederum unter Verwendung der oben genannten Katalysatoren sowie den oben genannten Reaktionsbedingungen erfolgen. Die Möglichkeit der Durchführung dieser erfindungsgemäßen Verfahrensvariante ist für den Fachmann besonders überraschend, da durch die alkalischen Katalysatoren eine Umlagerung der Siloxangerüste erwartet würde, was ggf. z.B. zu einem Austrag von Siloxancyclen führen würde. Selbst bei Einsatz von Tetraalkylammoniumhydroxid als alkalischer Katalysator findet keine Äquilibrierung der Polysiloxane statt.

In einer bevorzugten Variante des erfindungsgemäßen Verfahrens gemäß Variante b) wird die Menge der eingesetzten organischen Carbonate so gewählt, dass ein molarer Überschuss an OH-Gruppen in Bezug auf die Carbonate vorliegt. Bevorzugt beträgt der Überschuss an OH-Gruppen 10 mol-% bis 60 mol-%, bezogen auf die Carbonate. Auf diese Weise kann ein teil-endverschlossenes Polysiloxanpolyether erhalten werden. Bevorzugt wird das Verhältnis von eingesetztem organischen Carbonat zu OH-Gruppen so gewählt, dass der Anteil der Polyetherreste, die einen Abschlussbaustein -O-C(O)-O-R" aufweisen, in Bezug auf die Gesamtzahl der vorhandenen Polyetherreste von 5 bis 98 mol-%, bevorzugt von 20 bis 75 mol-% und besonders bevorzugt von 35 bis 60 mol-% beträgt.

Als organische Verbindungen, die eine OH-Funktion und mindestens eine weitere zur Reaktion mit einer SiH-Funktion oder SiZ-Funktion befähigte Gruppe aufweisen, werden in dem erfindungsgemäßen Verfahren vorzugsweise Polyether der Formel (IIIb) eingesetzt,

Q'-X-(R₈X-)_{w}-(CH₂-CH₂O-)ₓ-(CH₂-CH(R')O-)_{y}-H (IIIb)

mit Q' = H oder CH₂=CH-(CH₂)_{q}- oder CH≡C-(CH₂)_{q}- und q = 0 oder 1, vorzugsweise 1, und X, w, x, y, R₈ und R' wie in den vorangegangenen Ansprüchen definiert.

Geeignete Polyether, die keine Carbonat-Gruppe aufweisen, und eine Vinyl- oder Ethinylendgruppe aufweisen, können insbesondere auch nach dem literaturbekannten Verfahren der alkalischen Alkoxylierung von einem eine Vinylgruppe aufweisenden Alkohol, insbesondere Allylalkohol, oder unter Verwendung von DMC-Katalysatoren wie im Stand der Technik, beispielsweise in der DE 10 2007 057145 A1, beschrieben, hergestellt werden.

Die erfindungsgemäßen Polysiloxanpolyether-Copolymeren oder die erfindungsgemäß hergestellten Polysiloxanpolyether-Copolymeren können z. B. als Schaumstabilisatoren bei der Herstellung von Polyurethanschäumen, bei der Herstellung von Polyurethan-basierten Kunststoffen, als Tenside für flüssig-CO₂-Extraktion, als oberflächenaktive Substanz für dry-cleaning oder als Emulgator für kosmetische Anwendungen verwendet werden.

Bei der Verwendung der erfindungsgemäßen Polysiloxanpolyether-Copolymeren insbesondere als Schaumstabilisator bei der Polyurethanschaumherstellung, können zur Herstellung der Polyurethanschäume alle bekannten Verfahren und Formulierungen verwendet werden. Prinzipiell erfolgt die Polyurethanschaumherstellung vorzugsweise so, wie sie z. B. in DE 3724716 und DE 102009003274 sowie den dort zitierten Schriften beschrieben wird.

Vorzugsweise wird bei der Verwendung der erfindungsgemäßen Polysiloxanpolyether-Copolymeren bei der Herstellung der Polyurethanschäume CO₂ als Treibmittel eingesetzt.

Bevorzugt werden bei der Herstellung der Polyurethanschäume Polyethercarbonat-Polyole als Polyolkomponenten eingesetzt.

Der erfindungsgemäße Polyurethanschaum, enthält mindestens ein erfindungsgemäßes oder erfindungsgemäß hergestelltes Polysiloxanpolyether-Copolymer. Vorzugsweise beträgt der Massenanteil an Verbindungen der Formel (I) am fertigen Polyurethanschaum von 0,01 bis 10 Gew.-%, bevorzugt 0,1 bis 3 Gew.-%. Der erfindungsgemäße Polyurethanschaum kann z. B. ein Polyurethanhartschaum, ein Polyurethanweichschaum, ein viskoelastischer Schaum, ein HR-Schaum, ein halbharter Polyurethanschaum, ein thermoverformbarer Polyurethanschaum oder ein Integralschaum sein. Die Bezeichnung Polyurethan ist hierbei als Oberbegriff für ein aus Di- bzw. Polyisocyanaten und Polyolen oder anderen gegenüber Isocyanat reaktive Spezies, wie z.B. Aminen, hergestelltes Polymer zu verstehen, wobei die Urethan-Bindung nicht ausschließlicher oder überwiegender Bindungstyp sein muss. Auch Polyisocyanurate und Polyharnstoffe sind ausdrücklich mit eingeschlossen.

Die Polyurethanschäume können z. B. als Kühlschrankisolierung, Dämmplatte, Sandwichelement, Rohrisolation, Sprühschaum, 1- & 1.5-Komponenten-Dosenschaum, Holzimitat, Modellschaum, Verpackungsschaum, Matratze, Möbelpolster, Automobil-Sitzpolster, Kopfstütze, Instrumententafel, Automobil-Innenverkleidung, Automobil-Dachhimmel, Schallabsorptionsmaterial, Lenkrad, Schuhsole, Teppichrückseitenschaum, Filterschaum, Dichtschaum und Kleber oder zur Herstellung entsprechender Produkte verwendet werden.

Der Gegenstand der vorliegenden Erfindung wird nachfolgend an Hand von Beispielen näher erläutert, ohne dass der Gegenstand der Erfindung auf diese beispielhaften Ausführungsformen beschränkt sein soll.

### Beispiele

### Beispiel 1 (nicht erfindungsgemäß):

In einem 500-ml-4-Halsrundkolben, der mit KPG-Rührer, Thermometer, Gaseinleitungsrohr und Rückflußkühler ausgestattet war, wurden
82,1 g eines Polyethers mit der mittleren Formel

CH₂=CH-CH₂O-(C₂H₄O)₄(C₃H₆O)₂₀-CH₃

zusammen mit
15,8 g eines Polyethers mit der mittleren Formel

CH₂=CH-CH₂O-(C₂H₄O)₁₃(C₃H₆O)₁₃-CH₃

und
39,9 g eines Polyethers mit der mittleren Formel

CH₂=CH-CH₂O-(C₂H₄O)₃₆(C₃H₆O)₃₇-CH₃

sowie
119,3 g eines Polyethers mit der mittleren Formel

CH₂=CH-CH₂O-(C₂H₄O)₃₆ (C₃H₆O)₃₇-H

und 60 g eines Poly(methylhydrogen)polydimethylsiloxan-Copolymeren mit einem durchschnittlichen Molekulargewicht von 5000 g/mol und einem SiH-Gehalt von 1,30 mmol/ g unter kräftigem Rühren und Inertgasbedampfung auf 70°C erhitzt und dann mit 5 ppm Pt (bezogen auf den Gesamtansatz) in Form des in der EP 1 520 870 beschrieben, sogenannten WK-Katalysators versetzt. Die Natriumbutylat induzierte Zersetzung einer nach 2 Stunden aliquot gezogenen, eingewogenen Probe der Reaktionsmischung in einer Gaszersetzungsapparatur zeigte keinerlei Wasserstoff-Freisetzung und belegte somit vollständigen SiH-Umsatz. Man ließ den Reaktionsansatz auf Raumtemperatur abkühlen und isolierte ein nahezu farbloses, Polyethersiloxan. Das erhaltene Polysiloxanpolyether-Copolymer weist einen Grad an Methylendverkappung von 75 mol% auf.

### Beispiel 2 (nicht erfindungsgemäß):

In einem 500-ml-4-Halsrundkolben, der mit KPG-Rührer, Thermometer, Gaseinleitungsrohr und Rückflußkühler ausgestattet ist, wurden
85,7 g eines Polyethers mit der mittleren Formel

CH₂=CH-CH₂O-(C₂H₄O)₄(C₃H₆O)₂₀-H

zusammen mit
15,4 g eines Polyethers mit der mittleren Formel

CH₂=CH-CH₂O-(C₂H₄O)₁₃(C₃H₆O)₁₃ -H

und
164,5 g eines Polyethers mit der mittleren Formel

CH₂=CH-CH₂O-(C₂H₄O)₃₆(C₃H₆O)₃₇-H

und 60 g eines Poly(methylhydrogen)polydimethylsiloxan-Copolymeren mit einem durchschnittlichen Molekulargewicht von 5078 g/mol und einem SiH-Gehalt von 1,28 mmol/ g unter kräftigem Rühren und Inertgasbedampfung auf 70°C erhitzt und dann mit 5 ppm Pt (bezogen auf den Gesamtansatz) in Form des in der EP 1 520 870 beschrieben, sogenannten WK-Katalysators versetzt. Die Natriumbutylat induzierte Zersetzung einer nach 2 Stunden aliquot gezogenen, eingewogenen Probe der Reaktionsmischung in einer Gaszersetzungsapparatur zeigte keinerlei Wasserstoff-Freisetzung und belegte somit vollständigen SiH-Umsatz. Man ließ den Reaktionsansatz auf Raumtemperatur abkühlen und isolierte ein nahezu farbloses, klares mit sekundären OH-Gruppen terminiertes Polyethersiloxan (OH-Zahl. 18 mg KOH/ g Substanz).

### Beispiel 3 (erfindungsgemäß): Ethylcarbonat-Endverkappung des im Beispiel 2 gewonnenen Polyethersiloxans

200 g des im Beispiel 2 gewonnen hydroxyfunktionellen Polyethersiloxans wurden zusammen mit 30 g (0,254 mol) Diethylcarbonat und 4,6 g Kaliumcarbonat (2 Massenprozent bezogen auf den Gesamtansatz) versetzt und das Reaktionsgemisch wurde für 3 Stunden bei 140°C am Rotationsverdampfer erhitzt. Flüchtige Anteile werden durch das Anlegen eines Hilfsvakuums (ca. 1 mbar Ölpumpen-vakuum) destillativ entfernt. Nach Entfernen der Feststoffe durch Filtration in einer Druckfilterpresse über eine Filterscheibe Seitz K 300 wurde ein klares, leicht gelbliches flüssiges Produkt isoliert, das eine OH-Zahl von 9,7 mg KOH/g Substanz besitzt. Diese OH-Zahl entspricht einem Grad der Ethylcarbonatendverkappung (bezogen auf alle OH-Gruppen) von 46 mol-%.

### Beispiel 4 (nicht erfindungsgemäß):

In einem 500-ml-4-Halsrundkolben, der mit KPG-Rührer, Thermometer, Gaseinleitungsrohr und Rückflußkühler ausgestattet ist, wurden
103,3 g eines Polyethers mit der mittleren Formel

CH₂=CH-CH₂O-(C₂H₄O)₄(C₃H₆O)₂₀-(C₂H₄O)₅-H

zusammen mit
17,9 g eines Polyethers mit der mittleren Formel

CH₂=CH-CH₂O-(C₂H₄O)₁₃(C₃H₆O)₁₃-(C₂H₄O)₅-H

und
173,7 g eines Polyethers mit der mittleren Formel

CH₂=CH-CH₂O-(C₂H₄O)₃₆(C₃H₆O)₃₇-(C₂H₄O)₅-H

und 60 g eines Poly(methylhydrogen)polydimethylsiloxan-Copolymeren mit einem durchschnittlichen Molekulargewicht von 5078 g/mol und einem SiH-Gehalt von 1,28 mmol/ g unter kräftigem Rühren und Inertgasbedampfung auf 70°C erhitzt und dann mit 5 ppm Pt (bezogen auf den Gesamtansatz) in Form des in der EP 1520870 beschrieben, sogenannten WK-Katalysators versetzt. Die Natriumbutylat induzierte Zersetzung einer nach 2 Stunden aliquot gezogenen, eingewogenen Probe der Reaktionsmischung in einer Gaszersetzungsapparatur zeigte keinerlei Wasserstoff-Freisetzung und belegte somit vollständigen SiH-Umsatz . Man ließ den Reaktionsansatz auf Raumtemperatur abkühlen und isolierte ein nahezu farbloses, klares mit primären OH-Gruppen terminiertes Polyethersiloxan (OH-Zahl. 21,7 mg KOH/ g Substanz).

### Beispiel 5 (erfindungsgemäß): Ethylcarbonat-Endverkappung des im Beispiel 4 gewonnenen Polyethersiloxans

150 g des im Beispiel 4 gewonnenen hydroxyfunktionellen Polyethersiloxans wurden zusammen mit 27,4 g (0,232 mol) Diethylcarbonat und 3,5 g Kaliumcarbonat (2 Massenprozent bezogen auf den Gesamtansatz) versetzt und das Reaktionsgemisch wurde für 3 Stunden bei 140°C am Rotationsverdampfer erhitzt. Flüchtige Anteile werden durch das Anlegen eines Hilfsvakuums (ca. 1 mbar Ölpumpen-vakuum) destillativ entfernt. Nach Entfernen von Feststoffen durch Filtration in einer Druckfilterpresse über eine Filterscheibe Seitz K 300 wird ein klares, leicht gelbliches Produkt isoliert, das eine OH-Zahl von 3,0 mg KOH/g Substanz besitzt. Diese OH-Zahl entspricht einem Grad der Ethylcarbonatendverkappung (bezogen auf alle OH-Gruppen) von 86,2 mol-%.

### Beispiel 6 (nicht erfindungsgemäß):

In einem 1000-ml-4-Halsrundkolben, der mit KPG-Rührer, Thermometer, Gaseinleitrohr und Rückflußkühler ausgestattet ist, wurden 350,6 g eines Polyethers mit der mittleren Formel CH₂=CH-CH₂O-(C₂H₄O)₈-H und 500 g eines Poly(methylhydrogen)polydimethylsiloxan-Copolymeren mit einem durchschnittlichen Molekulargewicht von 5114 g/mol und einem SiH-Gehalt von 1,27 mmol/ g unter kräftigem Rühren und Inertgasbedampfung auf 50°C erhitzt und dann mit 5 ppm Pt (bezogen auf den Gesamtansatz) in Form des in der EP 1 520 870 beschriebenen, sogenannten WK-Katalysators versetzt. Die einsetzende, kräftig exotherme Reaktion wurde durch die Verwendung eines Wasserbades moderiert. Nach 2 Stunden wurde eine aliquote Probe entnommen, eingewogen und in einer Gaszersetzungsapparatur mit Natriumbutylatlösung versetzt, so dass der hierbei freigesetzte Wasserstoff unmittelbar Aufschluß über den erzielten SiH-Umsatz gibt. Im betrachteten Beispiel war der Umsatz quantitativ, d.h. es wurde keinerlei Wasserstoffentwicklung beobachtet. Man lässt den Reaktionsansatz auf Raumtemperatur abkühlen und isoliert ein nahezu farbloses, klares mit primären OH-Gruppen terminiertes Polyethersiloxan (OH-Zahl. 59 mg KOH/ g Substanz).

### Beispiel 7 (erfindungsgemäß): Ethylcarbonat-Endverkappung des im Beispiel 6 gewonnenen Polyethersiloxans

178,7 g des im Beispiel 6 gewonnen hydroxyfunktionellen Polyethersiloxans wurden zusammen mit 85,2 g (0,72 mol) Diethylcarbonat und 5,3 g Kaliumcarbonat (2 Massenprozent bezogen auf den Gesamtansatz) versetzt und das Reaktionsgemisch wird im 1-l-Rundkolben für 3 Stunden bei 140°C am Rotationsverdampfer erhitzt. Flüchtige Anteile wurden durch das Anlegen eines Hilfsvakuums (ca. 1 mbar Ölpumpen-vakuum) destillativ entfernt. Nach Abkühlen und Entfernen der Feststoffe durch Filtration in einer Druckfilterpresse über eine Filterscheibe Seitz K 300 wurde ein klares, leicht gelbliches Produkt isoliert, das eine OH-Zahl von 4 mg KOH/g Substanz besaß. Diese OH-Zahl entspricht einem Grad der Ethylcarbonatendverkappung (bezogen auf alle OH-Gruppen) von 93 mol-%.

### Beispiel 8 (erfindungsgemäß): Ethylcarbonat-Endverkappung eines mit primären OH-Gruppen terminierten Polyethers

155,2 g (0,388 mol) eines Polyethers mit der mittleren Formel CH₂=CH-CH₂O-(C₂H₄O)₈- wurden mit 179,23 g (1,52 mol) Diethylcarbonat und 6,7 g Kaliumcarbonat (2 Massenprozent bezogen auf den Reaktionsansatz) versetzt und das Reaktionsgemisch wurde im 1-l-Rund-kolben für 3 Stunden bei 140°C am Rotationsverdampfer erhitzt. Flüchtige Anteile wurden dann durch das Anlegen eines Hilfsvakuums (ca. 1 mbar Ölpumpenvakuum) destillativ entfernt. Nach Abkühlen und Abtrennen des Feststoffes durch Filtration wurde ein leicht gelblicher, klarer Ethylcarbonat-terminierter Allylpolyether mit einer OH-Zahl von 4 mg KOH/ g Substanz isoliert. Bei einer Ausgangs-OH-Zahl von 144 mg KOH/ g Polyether entspricht der erzielte Endverschlußgrad (Grad der Ethylcarbonatendverkappung) von 97,2 mol-%.

### Beispiel 9 (erfindungsgemäß): Herstellung eines Ethylcarbonat-terminierten Siliconpolyether-Copolymeren via Hydrosilylierung

In einem 250-ml-4-Halsrundkolben, der mit KPG-Rührer, Thermometer, Gaseinleitrohr und Rückflußkühler ausgestattet ist, wurden 66,5 g des im Beispiel 8 gewonnenen Polyethers und 80 g eines Poly(methylhydrogen)polydimethylsiloxan-Copolymeren mit einem durchschnittlichen Molekulargewicht von 5078 g/mol und einem SiH-Gehalt von 1,28 mmol/ g unter kräftigem Rühren und Inertgasbedampfung auf 50°C erhitzt und dann mit 5 ppm Pt (bezogen auf den Gesamtansatz) in Form des in der EP 1 520 870 beschriebenen, sogenannten WK-Katalysators versetzt. Die einsetzende Exothermie der SiC-Verknüpfungsreaktion erwärmte den Reaktionsansatz auf über 90°C. Nach 2 Stunden wurde eine aliquote Probe entnommen, eingewogen und in einer Gaszersetzungsapparatur mit Natriumbutylatlösung versetzt, so dass der hierbei freigesetzte Wasserstoff unmittelbar Aufschluß über den erzielten SiH-Umsatz gab. Im betrachteten Beispiel war der Umsatz quantitativ, d.h. es wurde keinerlei Wasserstoffentwicklung beobachtet. Man ließ den Reaktionsansatz auf Raumtemperatur abkühlen und isolierte ein klares, leicht gelbliches mit Ethylcarbonat-Gruppen terminiertes Polyethersiloxan.

### Beispiel 10 (erfindungsgemäß): Ethylcarbonat-Endverkappung eines mit primären OH-Gruppen terminierten Polyethers

200 g (0,144 mol) eines Polyethers mit der mittleren Formel CH₂=CH-CH₂O-(C₂H₄O)₄(C₃H₆O)₂₀-(C₂H₄O)₅-H wurden mit 68,2 g (0,577 mol) Diethylcarbonat und 5,4 g Kaliumcarbonat (2 Massenprozent bezogen auf den Reaktionsansatz) versetzt und das Reaktionsgemisch wurde im 500-ml-Rundkolben für 3 Stunden bei 140°C am Rotationsverdampfer erhitzt. Flüchtige Anteile wurden dann durch das Anlegen eines Hilfsvakuums (ca. 1 mbar Ölpumpenvakuum) destillativ entfernt Nach Abkühlen und Abtrennen des Feststoffes durch Filtration wurde ein leicht gelblicher, klarer Ethylcarbonat-terminierter Allylpolyether mit einer OH-Zahl von 2 mg KOH/ g Substanz isoliert. Bei einer Ausgangs-OH-Zahl von 40,5 mg KOH/ g Polyether entspricht der erzielte Endverschlußgrad (Grad der Ethylcarbonatendverkappung) 95,0 mol-%.

### Beispiel 11 (erfindungsgemäß): Herstellung eines Ethylcarbonat-terminierten Siliconpolyether-Copolymeren via Hydrosilylierung

In einem 250-ml-4-Halsrundkolben, der mit KPG-Rührer, Thermometer, Gaseinleitrohr und Rückflußkühler ausgestattet ist, wurden
109,1 g des in Beispiel 10 gewonnenen Polyethers und
15,6 g eines Polyethers mit der mittleren Formel

CH₂=CH-CH₂O-(C₂H₄O)₁₃(C₃H₆O)₁₃-H

und
167,0 g eines Polyethers mit der mittleren Formel

CH₂=CH-CH₂O-(C₂H₄O)₃₆(C₃H₆O)₃₇-H

und 60 g eines Poly(methylhydrogen)polydimethylsiloxan-Copolymeren mit einem durchschnittlichen Molekulargewicht von 5000 g/mol und einem SiH-Gehalt von 1,30 mmol/ g unter kräftigem Rühren und Inertgasbedampfung auf 50°C erhitzt und dann mit 5 ppm Pt (bezogen auf den Gesamtansatz) in Form des in der EP 1 520 870 beschriebenen, sogenannten WK-Katalysators versetzt. Die einsetzende Exothermie der SiC-Verknüpfungsreaktion erwärmte den Reaktionsansatz auf über 90°C. Nach 2 Stunden wurde eine aliquote Probe entnommen, eingewogen und in einer Gaszersetzungsapparatur mit Natriumbutylatlösung versetzt, so dass der hierbei freigesetzte Wasserstoff unmittelbar Aufschluss über den erzielten SiH-Umsatz gab. Im betrachteten Beispiel war der Umsatz quantitativ, d.h. es wurde keinerlei Wasserstoffentwicklung beobachtet. Man ließ den Reaktionsansatz auf Raumtemperatur abkühlen und isolierte ein klares, leicht gelbliches, partiell mit Ethylcarbonat-Gruppen terminiertes Polyethersiloxan.

### Anwendungstechnische Prüfung:

Die anwendungstechnische Prüfung der hergestellten Schaumstabilisatoren erfolgte mit einer Schaumrezeptur auf folgende Weise:
Jeweils 300 Teile eines handelsüblichen Polyethers (Polyol Desmophen Arcol 1107, Fa. Bayer) zur Herstellung von flexiblen Polyurethanschaumstoffen, welcher im mittleren Molekül drei Hydroxylgruppen aufweist und ein Molekulargewicht von 3500 hat, wurde mit 15 Teilen Wasser, 15 Teilen eines üblichen physikalischen Treibmittels, der entsprechenden Menge des zu untersuchenden Schaumstabilisators, 0,33 Teilen Diethylentriamin und 0,69 Teilen Zinnoctoat unter gutem Rühren vermischt. Nach Zugabe von 189 Teilen Toluoldiisocyanat (Isomerengemisch 2,4 und 2,6 im Verhältnis 4 : 1) wurde mit einem Glattrührer 7 Sekunden bei 2500 U/Min. gerührt und das Gemisch in einen oben offenen Kasten (Länge = 27 cm, Breite = 27 cm, Höhe = 25 cm) (gegossen. Es entstand ein feinporiger Schaumstoff, der durch folgende Parameter charakterisiert wird:
   1 das Rücksacken des Schaumstoffes am Ende der Steigphase (den sogenannten "Rückfall"),
   2 die Zahl der Zellen pro Zentimeter Schaum, mikroskopisch ermittelt

Die nachfolgende Tabelle 1 gibt einen Überblick über die Syntheseparameter und Verschäumungsergebnisse der nach den beiden erfindungsgemäßen sowie nach dem nicht erfindungsgemäßen Vergleichsbeispiel 1 gewonnenen Stabilisatoren und stellt die Messwerte für 3 verschiedene Konzentrationen (1,0 Teile/ 0,6 Teile/ 0,5 Teile) gegenüber:

**Tabelle 1: Ergebnisse der anwendungstechnischen Prüfung**

| **Stabilisator gemäß** | **Einsatzkonzentration** | **Rückfall [cm]** | **Zellen pro Zentimeter** | **Endverschluss [mol-%] (Art des Endverschlusses)** |
|---|---|---|---|---|
| **Beispiel 1** | 1,0 Teile | n.b. | n.b. | 75% (Methyl) |
| | 0,6 Teile | 0,8 | 12-13 | |
| | 0,5 Teile | 1,3 | n.b. | |
| **Beispiel 3** | 1,0 Teile | 1,4 | n.b. | 46% (Ethylcarbonat) |
| | 0,6 Teile | 3,5 | 11 | |
| | 0,5 Teile | Kollaps | n.b. | |
| **Beispiel 5** | 1,0 Teile | Kollaps | n.b. | 86% (Ethylcarbonat) |
| | 0,6 Teile | Kollaps | n.b. | |
| | 0,5 Teile | Kollaps | n.b. | |
| **Beispiel 11** | 1,0 Teile | n.b. | n.b. | 55% (Ethylcarbonat) |
| | 0,6 Teile | 1,0 | 14 | |
| | 0,5 Teile | 1,5 | n.b. | |

| | | | | |
|---|---|---|---|---|
| n.b.: nicht bestimmt | | | | |

Im Ausführungsbeispiel 3 wird die Herstellung eines solchen an sekundären Polyetheralkoholgruppen partiell Carbonat-endverschlossenen Systems gezeigt, sowie die Wirkung dieses neuen, grenzflächenaktiven Copolymers auf eine konventionelle PU-Weichschaummatrix. Im geringen Konzentrationsbereich von 0,5 Teilen bezogen auf die Verschäumungsmatrix ist die zellöffnende Wirkung bereits so beträchtlich, dass man einen Schaumkollaps beobachtet. Erst höhere Einsatzkonzentrationen von 0,6 bzw. 1 Teil bezogen auf die Verschäumungsmatrix sorgen hingegen bei immer noch signifikanten Rückfällen für eine Schaumstabilisierung.

Diese beobachtete Tendenz zur Zellöffnung bis hin zur Entschäumung kommt um so mehr zum Tragen, wenn das Polyethersiloxan bei vergleichbarer Basisstruktur mit primären OH-Funktionen ausgestattet ist und im Zuge der erfindungsgemäßen Lehre mit Organocarbonatgruppen verestert wird (Ausführungsbeispiel 5). Hierbei wird ein Carbonat-Endverschluß von 86% erreicht. Über den gesamten betrachteten Konzentrationsbereich von 0,5, 0,6 (und 1 Teil) des so hergestellten Schaumstabilisators bezogen auf die zu verschäumende Weichschaummatrix wird Kollaps beobachtet.

Ein mit Carbonatgruppen erzielter Endverschlussgrad von 55 mol-% bewirkt im erfindungsgemäßen Ausführungsbeispiel 11, dass man bei einer niedrigen Einsatzkonzentration von 0,6 Teilen eine Zellfeinheit gewährleisten kann, die sogar diejenige übertrifft, die ein mit 75% Methylendverschlußgrad versehenes Polyethersiloxansystem vergleichbarer struktureller Basis bei identischer Einsatzkonzentration bietet (14 Zellen/ cm gegenüber 12-13 Zellen/ cm). Diese Beobachtungen zeigen, dass das strukturelle Merkmal eines Organocarbonat-Endverschlusses an den Polyetherresten von Polyethersiloxanen vorzüglich als Steuerungselement für das Systemverhalten speziell in Polyurethanweichschaumsystemen genutzt werden kann.

Die erfindungsgemäßen Alkylcarbonat-endverschlossene Polysiloxanpolyether bzw. Mischungen davon, die ggf. auch zumindest einen Polyether aufweisen, sind daher außerordentlich gut geeignet Polyurethanschäume zu stabilisieren und die Zellstruktur zu steuern. Es obliegt dem Fachmann die Konzentrationsbereiche je nach Anwendung und zu erzielender Zellstruktur durch einfache Vorversuche zu bestimmen.

## Patentansprüche

1. Polysiloxanpolyether-Copolymere die mindestens einen (Polyether)Rest aufweisen, **dadurch gekennzeichnet, dass** mindestens ein (Polyether-)Rest vorhanden ist, der als Abschluss mindestens einen Baustein -O-C(O)-O-R" aufweist, mit R" = gleiche oder verschiedene Alkylreste,
wobei das Polysiloxanpolyether-Copolymer der Formel (I) genügt: 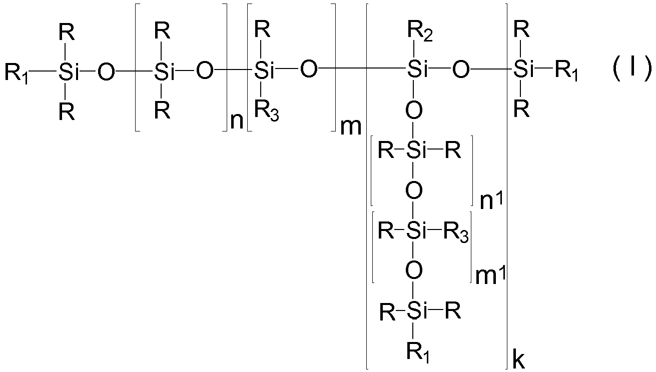 worin
n und n¹ unabhängig voneinander 0 bis 500, vorzugsweise 10 bis 200, insbesondere 15 bis 100 sind und (n+n¹) ≤ 500, vorzugsweise ≤ 200, insbesondere von > 0 bis ≤ 100 ist, m und m¹ unabhängig voneinander 0 bis 60, vorzugsweise 0 bis 30, insbesondere 0,1 bis 25 sind und (m+m¹) ≤ 60 ist, vorzugsweise ≤ 30, insbesondere von > 0 bis ≤ 25 ist, k = 0 bis 50 ist, vorzugsweise 0 bis 10 ist, insbesondere 0 oder von 1 bis 5 ist,
wobei R ein Methylrest ist,
R₁ unabhängig voneinander R oder R₃ oder R₇ ist,
R₂ unabhängig voneinander R oder R₃ oder R₇ oder ein mit Heteroatomen substituierter, funktioneller, organischer, gesättigter oder ungesättigter Rest, vorzugsweise ausgesucht aus der Gruppe der Alkyl-, Chloralkyl-, Chloraryl-, Fluoralkyl-, Cyanoalkyl-, Acryloxyaryl-, Acryloxyalkyl-, Methacryloxyalkyl-, Methacryloxypropyl- oder Vinyl-Reste, besonders bevorzugt ein Methyl-, Chlorpropyl-, Vinyl- oder ein Methacryloxypropyl-Rest ist, R₃ gleich oder verschieden ein Rest der Formel (Va) oder (Vb)
-Qₗ-X-(R₈X-)_{w}(CH₂-CH₂O-)ₓ(C(O)-O)ₚ(CH₂-CH(R')O-)_{y}(C(O)-O-R" (Va)
oder
-Qₗ-X-(R₈X-)_{w}-(CH₂-CH₂O)ₓ-(CH₂-CH(R')O-)_{y}-R"' (Vb)
mit
l = 0 oder 1,
X = unabhängig voneinander NR^{Z}, O oder S, vorzugsweise NR^{Z} oder O,
R^{Z} = gleich oder verschieden H oder Alkylrest, vorzugsweise H,
Q = zweiwertiger Kohlenwasserstoffrest mit 2 bis 6 Kohlenstoffatomen, vorzugsweise Q = -CH₂-CH₂-CH₂- oder -CH₂-CH₂-
R₈ gleich oder verschieden verzweigter oder unverzweigter, cyclischer, gesättigter, ungesättigter Kohlenwasserstoffrest mit einer mindestens 2 Kohlenstoffatome aufweisenden Kohlenstoffkette zwischen den durch den Kohlenwasserstoffrest verbundenen Heteroatomen X, vorzugsweise ein linearer Kohlenwasserstoffrest -CⱼH₂ⱼ- mit j ≥ 2, vorzugsweise j = 4 bis 12, bevorzugt j = 6 bis 10,
w = 0 bis 200, vorzugsweise 1 bis 150, bevorzugt 3 bis 20,
x = 0 bis 200, vorzugsweise 5 bis 140, bevorzugt 10 bis 100,
y = 0 bis 200, vorzugsweise 5 bis 140, bevorzugt 10 bis 100,
p = 0 bis 100, vorzugsweise 1 bis 20, bevorzugt 2 bis 10 wobei die mit den Indizes w, x, y und p versehenen Bausteine blockweise oder statistisch angeordnet sein können,
R' = gleiche oder verschiedene, unsubstituierte oder gegebenenfalls substituierte, beispielsweise mit Alkylresten, Arylresten oder Halogenalkyl- oder Halogenarylresten substituierte, Alkyl- oder Arylgruppe mit insgesamt 1 bis 12 C-Atomen, vorzugsweise eine Methyl- oder Ethylgruppe, bevorzugt eine Methylgruppe und
R" = gleich oder verschieden eine Alkylgruppe, vorzugsweise mit 1 bis 30 C-Atomen, bevorzugt ein Methylrest,
R"" = gleich oder verschieden ein Wasserstoffrest, eine Alkylgruppe mit 1 bis 30 C-Atomen, eine Gruppe -C(O)-R"' mit R'" = Alkylrest, eine Gruppe -CH2-O-R', eine Alkylarylgruppe, wie z. B. eine Benzylgruppe, eine Gruppe -C(O)-O-R"" mit R"" = Alkylrest oder Alkylaryl, die Gruppe -C(O)-OR' oder die Gruppe -C(O)NH-R', vorzugsweise ein Alkyl-, insbesondere Methyl-, oder Acetylrest,
R₇ = Vernetzerrest,
mit der Maßgabe, dass mindestens ein Rest R₃ vorhanden ist, der der Formel (Va) genügt.

2. Polysiloxanpolyether-Copolymer gemäß Anspruch 1, **dadurch gekennzeichnet, dass** n und n¹ unabhängig voneinander 3 bis 147 sind und (n+n¹) ≤ 150 ist, k = 0 oder von 1 bis 5 ist,
R = ein Methylrest ist,
R₁ = R oder R₃,
R₂ = R oder R₃ oder ein Chlorpropyl-, Vinyl- oder ein Methacryloxypropyl-Rest ist, und mindestens ein Rest R₃ vorhanden ist, der gleich oder verschieden -Qₗ-X-(R₈X-)_{w}-(CH₂-CH₂O-)ₓ-(CH₂-CH(R')O-)_{y}-(C(O)-O)ₚ-R" ist, mit l=0 oder l = 1 und Q = -CH₂-CH₂-CH₂-,
R₈ = ein linearer Kohlenwasserstoffrest -CⱼH₂ⱼ- mit j = 4 bis 12,
w = 0 oder 1 bis 100,
x = 0 oder 5 bis 140,
y = 0 oder 5 bis 140, mit der Maßgabe, dass die Summe x + y ≥ 5 ist,
p = 1 bis 10,
R' = gleich oder verschieden eine Phenyl-, Methyl- oder Ethylgruppe, bevorzugt eine Methylgruppe und R" einen Wasserstoffrest oder einen Methyl-, Butyl- oder Acetylrest bedeutet.

3. Polysiloxanpolyether-Copolymer gemäß einem der Ansprüche 1 oder 2, **dadurch gekennzeichnet, dass** es durch ein Verfahren gemäß einem der Ansprüche 6 bis 12 erhältlich ist.

4. Polysiloxanpolyether-Copolymer gemäß einem der Ansprüche 1 bis 3, **dadurch gekennzeichnet, dass** die Polysiloxanpolyether-Copolymeren als Mischungen vorliegen, in denen auch Polysiloxanpolyether-Copolymeren vorliegen, die keine Polyetherreste aufweisen, die als Abschluss mindestens einen Baustein -O-C(O)-O-R" aufweisen, und/oder in Mischungen mit einem oder mehreren Polyethern vorliegen, die keine Si-Atome aufweisen.

5. Polysiloxanpolyether-Copolymer gemäß einem der Ansprüche 1 bis 4, **dadurch gekennzeichnet, dass** in den Polysiloxanpolyether-Copolymeren in denen mindestens ein Polyether-Rest vorhanden ist, der als Abschluss mindestens einen Baustein -O-C(O)-O-R" aufweist, der molare Anteil, der Polyetherreste, die einen Abschlussbaustein -O-C(O)-O-R" aufweisen, in Bezug auf die Gesamtzahl der jeweils in den Polysiloxanpolyether-Copolymeren vorhandenen Polyetherreste von 5 bis 98 mol-% beträgt.

6. Verfahren zur Herstellung von Polysiloxanpolyether-Copolymeren, **dadurch gekennzeichnet, dass** ein mindestens eine SiH-Funktion oder eine SiZ-Funktion, mit Z = Halogenatom, aufweisendes Polyorganosiloxan mit mindestens einer organischen Verbindung, die mindestens eine Carbonat-Funktion und mindestens eine weitere zur Reaktion mit einer SiH-Funktion oder einer SiZ-Funktion befähigte Gruppe aufweist, umgesetzt wird und/oder zunächst mit einer organischen Verbindung, die eine OH-Funktion und mindestens eine zur Reaktion mit einer SiH-Funktion oder einer SiZ-Funktion befähigte Gruppe aufweist umgesetzt wird und anschließend mit einem Dialkylcarbonat umgesetzt wird,
wobei als mindestens eine SiH-Funktion oder eine SiZ-Funktion aufweisendes Polyorganosiloxan, Polyorganosiloxane mit endständigen und/oder seitenständigen SiH-Funktionen oder SiZ-Funktionen, der Formel (II) eingesetzt werden, 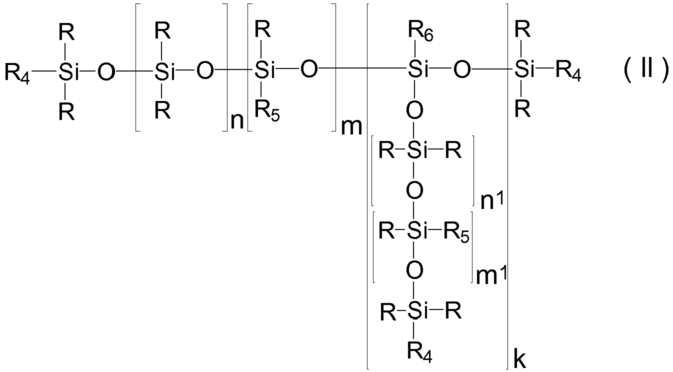 worin
n und n¹ unabhängig voneinander 0 bis 500, vorzugsweise 10 bis 200, insbesondere 15 bis 100 sind und (n+n¹) ≤ 500, vorzugsweise ≤ 200, insbesondere von > 0 bis ≤ 100 ist,
m und m¹ unabhängig voneinander 0 bis 60, vorzugsweise 0 bis 30, insbesondere 0,1 bis 25 sind und (m+m¹) ≤ 60, vorzugsweise ≤ 30, insbesondere von > 0 bis ≤ 25 ist,
k = 0 bis 50, vorzugsweise 0 bis 10 und insbesondere 0 oder 1 bis 5 ist,
R = ein Methylrest ist,
R₄ unabhängig voneinander Wasserstoff, Z oder R ist,
R₅ unabhängig voneinander Wasserstoff, Z oder R ist,
R₆ unabhängig voneinander Wasserstoff, Z, R oder ein mit Heteroatomen substituierter, funktioneller, organischer, gesättigter oder ungesättigter Rest, vorzugsweise ausgesucht aus der Gruppe der Alkyl-, Chloralkyl-, Chloraryl-, Fluoralkyl-, Cyanoalkyl-, Acryloxyaryl-, Acryloxyalkyl-, Methacryloxyalkyl-, Methacryloxypropyl- oder Vinyl-Reste, besonders bevorzugt ein Chlorpropyl-, Vinyl- oder ein Methacryloxypropyl-Rest ist,
mit der Maßgabe, dass mindestens einer der Reste R₄, R₅ und R₆ ein Wasserstoff oder Z ist.

7. Verfahren nach Anspruch 6, **dadurch gekennzeichnet, dass** als organische Verbindungen, die mindestens eine oder eine weitere zur Reaktion mit einer SiH-Funktion oder einer SiZ-Funktion befähigte Gruppe aufweisen, Verbindungen eingesetzt werden, die als zur Reaktion mit einer SiH-Funktion befähigte Gruppe, eine Ethenyl- oder Ethinyl-endgruppe aufweisen.

8. Verfahren nach Anspruch 6 oder 7, **dadurch gekennzeichnet, dass** als organische Verbindungen, die mindestens eine Carbonat-Funktion und mindestens eine weitere zur Reaktion mit einer SiH-Funktion oder SiZ-Funktion befähigte Gruppe aufweisen, Polyether der Formel (IIIa) eingesetzt werden,
Q'-X-(R₈X-)_{w}-(CH₂-CH₂O-)ₓ-(C(O)-Y)ₚ-(CH₂-CH(R')O-)_{y}-C(O)-O-R" (IIIa)
mit Q' = H oder CH₂=CH-(CH₂)_{q}- oder CH≡C-(CH₂)_{q}- und q = 0 oder 1, vorzugsweise 1, p = 1 bis 100, vorzugsweise 1 bis 10,
R", w, x, y, R₈ und R' wie in den vorangegangenen Ansprüchen definiert.

9. Verfahren nach mindestens einem der Ansprüche 6 bis 8, **dadurch gekennzeichnet, dass** als organische Verbindungen, die eine OH-Funktion und mindestens eine weitere zur Reaktion mit einer SiH-Funktion oder SiZ-Funktion befähigte Gruppe aufweisen, Polyether der Formel (IIIb) eingesetzt werden,
Q'-X-(R₈X-)_{w}-(CH₂-CH₂O-)ₓ-(CH₂-CH(R')O-)_{y}-H (IIIb)
mit Q' = H oder CH₂=CH-(CH₂)_{q}- oder CH≡C-(CH₂)_{q}- und q = 0 oder 1, vorzugsweise 1, und X, w, x, y, R₈ und R' wie in den vorangegangenen Ansprüchen definiert.

10. Verfahren nach Anspruch 8, **dadurch gekennzeichnet, dass** ein Polyether der Formel (IIIa) eingesetzt wird,
bei dem Q' = CH₂=CH-CH₂-, X und Y jeweils O, R₈ = ein linearer Kohlenwasserstoffrest -CⱼH₂ⱼ- mit j = 4 bis 12, w = 0 oder 1 bis 100, bevorzugt 0, x = 0 oder 5 bis 140, bevorzugt 5 bis 40, y = 0 oder 5 bis 140, mit der Maßgabe, dass die Summe x + y ≥ 5 ist, p = 1 bis 10, R' = eine Methyl- oder Ethylgruppe, bevorzugt eine Methylgruppe und R" einen Methyl- oder Butylrest bedeutet,
oder
bei dem Q' = H, X und Y jeweils O, R₈ = ein linearer Kohlenwasserstoffrest -CⱼH₂ⱼ- mit j = 4 bis 12, w = 0 oder 1 bis 100, bevorzugt 0, x = 0 oder 5 bis 140, bevorzugt 5 bis 40, y = 0 oder 5 bis 140, mit der Maßgabe, dass die Summe x + y ≥ 5 ist, p = 1 bis 10, R' = eine Methyl- oder Ethylgruppe, bevorzugt eine Methylgruppe und R" einen Wasserstoffrest oder einen Methyl- oder Butylrest bedeutet.

11. Verfahren nach Anspruch 10, **dadurch gekennzeichnet, dass** als mindestens eine SiH-Funktion oder eine SiZ-Funktion aufweisendes Polyorganosiloxan Polyorganosiloxane mit endständigen und/oder seitenständigen SiH-Funktionen oder SiZ-Funktionen, der Formel (II) eingesetzt werden, bei denen dass n und n¹ unabhängig voneinander 15 bis 100 sind und (n+n¹) ≤ 100 ist, k = 0 oder von 1 bis 5 ist, R = ein Methylrest ist, und R₆ = R oder ein Chlorpropyl-, Vinyl- oder ein Methacryloxypropyl-Rest ist.

12. Verwendung von Polysiloxanpolyether-Copolymeren gemäß einem der Ansprüche 1 bis 5 oder hergestellt gemäß einem der Ansprüche 6 bis 11 als Schaumstabilisatoren bei der Herstellung von Polyurethanschäumen, bei der Herstellung von Polyurethan-basierten Kunststoffen, als Tenside für flüssig-CO₂-Extraktion, als oberflächenaktive Substanz für dry-cleaning oder als Emulgator für kosmetische Anwendungen.

13. Verwendung nach Anspruch 12, **dadurch gekennzeichnet, dass** bei der Herstellung der Polyurethanschäume CO₂ als Treibmittel eingesetzt wird.

14. Verwendung nach Anspruch 12 oder 13, **dadurch gekennzeichnet, dass** bei der Herstellung der Polyurethanschäume Polyethercarbonat-Polyole eingesetzt werden.

15. Polyurethanschaum, enthaltend mindestens ein Polysiloxanpolyether-Copolymer gemäß einem der Ansprüche 1 bis 5 oder hergestellt gemäß einem der Ansprüche 12 bis 14.

16. Verwendung von Polyurethanschäumen gemäß Anspruch 15 als Kühlschrankisolierung, Dämmplatte, Sandwichelement, Rohrisolation, Sprühschaum, 1- & 1.5-Komponenten-Dosenschaum, Holzimitat, Modellschaum, Verpackungsschaum, Matratze, Möbelpolster, Automobil-Sitzpolster, Kopfstütze, Instrumententafel, Automobil-Innenverkleidung, Automobil-Dachhimmel, Schallabsorptionsmaterial, Lenkrad, Schuhsole, Teppichrückseitenschaum, Filterschaum, Dichtschaum und Kleber oder zur Herstellung entsprechender Produkte.

## Claims

1. Polysiloxane-polyether copolymers comprising at least one polyether moiety, **characterized in that** there is at least one polyether moiety capped with at least one -O-C(O)-O-R" unit where R" = identical or different alkyl moieties,
wherein the polysiloxane-polyether copolymer satisfies formula (I): 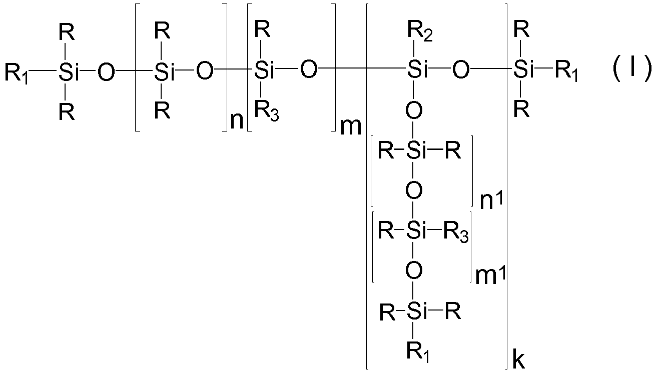 where
n and n¹ are each independently from 0 to 500, preferably from 10 to 200 and especially from 15 to 100 and (n+n¹) is ≤ 500, preferably ≤ 200 and especially from > 0 to ≤ 100, m and m¹ are each independently from 0 to 60, preferably from 0 to 30 and especially from 0.1 to 25 and (m+m¹) is ≤ 60, preferably ≤ 30 and especially from > 0 to ≤ 25, k = 0 to 50, preferably from 0 to 10 and especially 0 or from 1 to 5,
where R is methyl,
R₁ in each occurrence is independently R or R₃ or R₇,
R₂ in each occurrence is independently R or R₃ or R₇ or a heteroatom-substituted, functional, organic, saturated or unsaturated moiety, preferably selected from the group of alkyl, chloroalkyl, chloroaryl, fluoroalkyl, cyanoalkyl, acryloyloxyaryl, acryloyloxyalkyl, methacryloyloxyalkyl, methacryloyloxypropyl or vinyl moieties and more preferably is methyl, chloropropyl, vinyl or methacryloyloxypropyl,
R₃ in each occurrence is the same or different and is a moiety of formula (Va) or (Vb)
-Qₗ-X-(R₈X-)_{w}-(CH₂-CH₂O-)ₓ-(C(O)-O)ₚ-(CH₂-CH(R')O-)_{y}-(C(O)-O-R" (Va)
or
-Qₗ-X-(R₈X-)_{w}-(CH₂-CH₂O-)ₓ-(CH₂-CH(R')O-)_{y}-R"" (Vb)
where
1 = 0 or 1,
X = in each occurrence independently NR^{Z}, O or S, preferably NR^{Z} or O,
R^{Z} = the same or different in each occurrence, H or alkyl, preferably H,
Q = divalent hydrocarbon moiety of 2 to 6 carbon atoms, preferably
Q = -CH₂-CH₂-CH₂- or -CH₂-CH₂-
R₈, the same or different in each occurrence, is a branched or unbranched, cyclic, saturated, unsaturated hydrocarbon moiety having an at least 2 carbon atom chain between the heteroatoms X connected via the hydrocarbon moiety and preferably is a linear hydrocarbon moiety -CⱼH₂ⱼ- where j ≥ 2, preferably j = 4 to 12 and more preferably j = 6 to 10,
w = 0 to 200, preferably 1 to 150 and more preferably from 3 to 20,
x = 0 to 200, preferably 5 to 140 and more preferably from 10 to 100,
y = 0 to 200, preferably 5 to 140 and more preferably from 10 to 100,
p = 0 to 100, preferably 1 to 20, and more preferably from 2 to 10,
where the structural units bearing the indices w, x, y and p may form a blockwise arrangement or random distribution,
R' = identical or different, unsubstituted or optionally substituted, for example alkyl-, aryl- or haloalkyl- or haloaryl-substituted, alkyl or aryl groups having altogether 1 to 12 carbon atoms, preferably methyl or ethyl and more preferably methyl, and
R", the same or different in each occurrence = an alkyl group, preferably of 1 to 30 carbon atoms, more preferably methyl,
R"", the same or different in each occurrence = hydrogen, an alkyl group of 1 to 30 carbon atoms, a -C(O)-R'" group where R"' = alkyl, a -CH2-O-R' group, an alkylaryl group, for example benzyl, a - C(O)-O-R"" group where R'"' = alkyl or alkylaryl, a -C(O)-OR' group or a -C(O)NH-R' group, preferably alkyl, especially methyl, or acetyl,
R₇ = crosslinker moiety,
with the proviso that there is at least one R₃ of formula (Va).

2. Polysiloxane-polyether copolymer according to Claim 1, **characterized in that** n and n¹ are each independently from 3 to 147 and (n+n¹) is ≤ 150, k = 0 or from 1 to 5,
R = methyl,
R₁ = R or R₃,
R₂ = R or R₃ or chloropropyl, vinyl or methacryloyloxypropyl, and there is at least one R₃ which, the same or different in each occurrence, is -Qₗ-X-(R₈X-)_{w}-(CH₂-CH₂O-)ₓ-(CH₂-CH(R')O-)_{y}-(C(O)-O)ₚ-R" where 1 = 0 or 1 = 1 and Q = -CH₂-CH₂-CH₂-,
R₈ = a linear hydrocarbon moiety -CⱼH₂ⱼ- where j = 4 to 12,
w = 0 or from 1 to 100,
x = 0 or from 5 to 140,
y = 0 or from 5 to 140, with the proviso that the sum x + y is ≥ 5,
p = from 1 to 10,
R' the same of different in each occurrence = phenyl, methyl or ethyl, preferably methyl, and R" is hydrogen, methyl, butyl or acetyl.

3. Polysiloxane-polyether copolymer according to either of Claims 1 and 2, **characterized in that** it is obtainable via a process according to any one of Claims 6 to 12.

4. Polysiloxane-polyether copolymer according to any one of Claims 1 to 3, **characterized in that** the polysiloxane-polyether copolymers are mixtures which also include polysiloxane-polyether copolymers containing no polyether moieties having at least one -O-C(O)-O-R" unit as capping, and/or in mixtures with one or more polyethers containing no silicon atoms.

5. Polysiloxane-polyether copolymer according to any one of Claims 1 to 4, **characterized in that** the polysiloxane-polyether copolymers containing at least one polyether moiety having at least one -O-C(O)-O-R" unit as capping have a molar fraction of from 5 to 98 mol% for polyether moieties having a capping -O-C(O)-O-R" unit, relative to the total number of polyether moieties present in each case in the polysiloxane-polyether copolymers.

6. Process for preparing polysiloxane-polyether copolymers, **characterized in that** a polyorganosiloxane having at least one SiH or SiZ function, where Z = halogen, is reacted with at least one organic compound having at least one carbonate function and at least one further group capable of reacting with an SiH or SiZ function, and/or initially with an organic compound having an OH function and at least one group capable of reacting with an SiH or SiZ function and then with a dialkyl carbonate,
wherein the polyorganosiloxane used as having at least one SiH or SiZ function comprises polyorganosiloxanes having end-disposed and/or side-disposed SiH or SiZ functions, of formula (II), 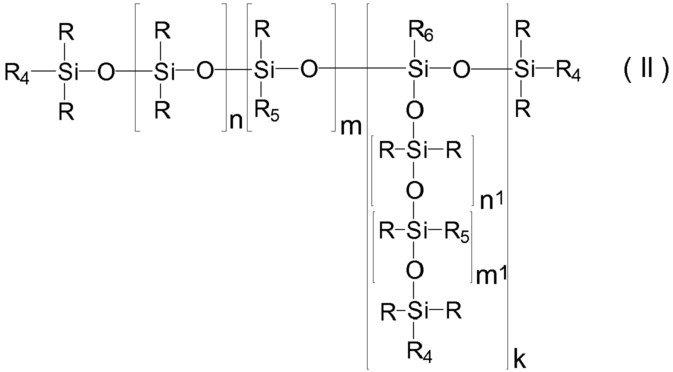 where
n and n¹ are each independently from 0 to 500, preferably from 10 to 200 and especially from 15 to 100 and (n+n¹) is ≤ 500, preferably ≤ 200 and especially from > 0 to ≤ 100,
m and m¹ are each independently from 0 to 60, preferably from 0 to 30 and especially from 0.1 to 25 and (m+m¹) is ≤ 60, preferably ≤ 30 and especially from > 0 to ≤ 25,
k = 0 to 50, preferably from 0 to 10 and especially 0 or from 1 to 5,
R = methyl,
R₄ independently in each occurrence is hydrogen, Z or R,
R₅ independently in each occurrence is hydrogen, Z or R,
R₆ independently in each occurrence is hydrogen, Z, R or a heteroatom-substituted, functional, organic, saturated or unsaturated moiety, preferably selected from the group of alkyl, chloroalkyl, chloroaryl, fluoroalkyl, cyanoalkyl, acryloyloxyaryl, acryloyloxyalkyl, methacryloyloxyalkyl, methacryloyloxypropyl or vinyl moieties and more preferably is chloropropyl, vinyl or methacryloyloxypropyl,
with the proviso that at least one of R₄, R₅ and R₆ is hydrogen or Z.

7. Process according to Claim 6, **characterized in that** compounds used as organic compounds having at least one or one further group capable of reacting with an SiH or SiZ function have an ethenyl or ethynyl end group as group capable of reacting with an SiH function.

8. Process according to Claim 6 or 7, **characterized in that** organic compounds having at least one carbonate function and at least one further group capable of reacting with an SiH or SiZ function comprise polyethers of formula (IIIa),
Q'-X-(R₈X-)_{w}-(CH₂-CH₂O-)ₓ-(C(O)-Y)ₚ-(CH₂-CH(R')O-)_{y}-C(O)-O-R" (IIIa)
where Q' = H or CH₂=CH-(CH₂)_{q}- or CH≡C-(CH₂)_{q}- and q = 0 or 1, preferably 1, p = 1 to 100 and preferably from 1 to 10,
R", w, x, y, R₈ and R' are each as defined in preceding claims.

9. Process according to one or more of Claims 6 to 8, **characterized in that** organic compounds having an OH function and at least one further group capable of reacting with an SiH or SiZ function comprise polyethers of formula (IIIb),
Q'-X-(R₈X-)_{w}-(CH₂-CH₂O-)ₓ-(CH₂-CH(R')O-)_{y}-H (IIIB)
where Q' = H or CH₂=CH-(CH₂)_{q}- or CH≡C-(CH₂)_{q}- and q = 0 or 1, preferably 1, and X, w, x, y, R₈ and R' are each as defined in preceding claims.

10. Process according to Claim 8, **characterized in that** a polyether is used of formula (IIIa)
wherein Q' = CH₂=CH-CH₂-, and X and Y are each O, R₈ = a linear hydrocarbon moiety -CⱼH₂ⱼ- where j = 4 to 12, w = 0 or from 1 to 100, preferably 0, x = 0 or from 5 to 140, and preferably from 5 to 40, y = 0 or from 5 to 140, with the proviso that the sum x + y is ≥ 5, p = 1 to 10, R' = methyl or ethyl, preferably methyl, and R" is methyl or butyl,
or
wherein Q' = H, X and Y are each O, R₈ = a linear hydrocarbon moiety -CⱼH₂ⱼ- where j = 4 to 12, w = 0 or from 1 to 100, preferably 0, x = 0 or from 5 to 140, and preferably from 5 to 40, y = 0 or from 5 to 140, with the proviso that the sum x + y is ≥ 5, p = 1 to 10, R' = methyl or ethyl, preferably methyl and R" is hydrogen or methyl or butyl.

11. Process according to Claim 10, **characterized in that** the polyorganosiloxane used as having at least one SiH function or SiZ function comprises polyorganosiloxanes having end-disposed and/or side-disposed SiH or SiZ functions, of formula (II) wherein n and n¹ are each independently from 15 to 100 and (n+n¹) is ≤ 100, k is 0 or from 1 to 5, R = methyl, and R₆ = R or chloropropyl, vinyl or methacryloyloxypropyl.

12. Use of polysiloxane-polyether copolymers according to any one of Claims 1 to 5 or obtained according to any one of Claims 6 to 11 as foam stabilizers in the production of polyurethane foams, in the production of polyurethane-based plastics, as surfactants for liquid CO₂ extraction, as surface-active substance for dry-cleaning or as emulsifier for cosmetic applications.

13. Use according to Claim 12, **characterized in that** CO₂ is used as blowing agent in the production of polyurethane foams.

14. Use according to Claim 12 or 13, **characterized in that** polyether carbonate polyols are used in the production of polyurethane foams.

15. Polyurethane foam containing at least one polysiloxane-polyether copolymer according to any one of Claims 1 to 5 or obtained according to any one of Claims 12 to 14.

16. Use of polyurethane foams according to Claim 15 as refrigerator insulation, insulation panel, sandwich element, tube insulation, spray foam, 1- & 1.5-component can foam, wood imitation, modelling foam, packaging foam, mattress, furniture cushioning, automotive seat cushioning, headrest, dashboard, automotive interior, automotive roof liner, sound absorption material, steering wheel, shoe sole, carpet backing foam, filter foam, sealing foam and adhesive or for producing corresponding products.

## Revendications

1. Copolymères de polysiloxane-polyéther qui comprennent au moins un radical polyéther, **caractérisés en ce qu'**au moins un radical polyéther qui comprend en tant que terminaison au moins un constituant -O-C(O)-OR", avec R"" = radicaux alkyle identiques ou différents, est présent,
le copolymère de polysiloxane-polyéther satisfaisant la formule (I) : 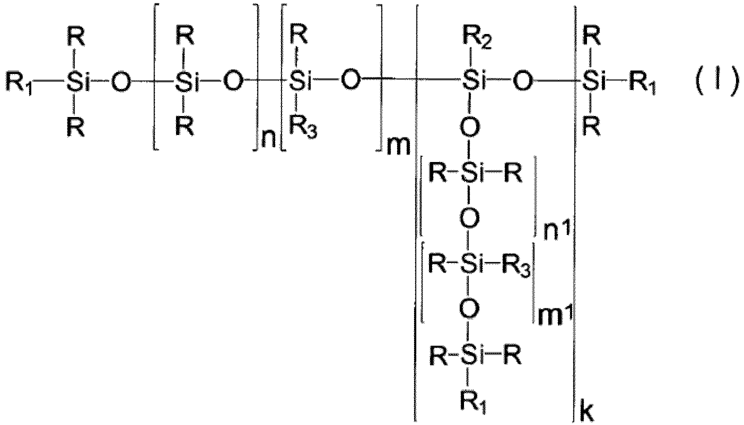 dans laquelle
n et n¹ représentent indépendamment l'un de l'autre 0 à 500, de préférence 10 à 200, notamment 15 à 100, et (n+n¹) ≤ 500, de préférence ≤ 200, notamment de > 0 à ≤ 100, m et m¹ représentent indépendamment l'un de l'autre 0 à 60, de préférence 0 à 30, notamment 0,1 à 25, et (m+m¹) ≤ 60, de préférence ≤ 30, notamment de > 0 à ≤ 25, k = 0 à 50, de préférence 0 à 10, notamment 0 ou de 1 à 5,
R est un radical méthyle,
les R₁ représentent indépendamment les uns des autres R ou R₃ ou R₇,
les R₂ représentent indépendamment les uns des autres R ou R₃ ou R₇ ou un radical fonctionnel, organique, saturé ou insaturé, substitué avec des hétéroatomes, de préférence choisi dans le groupe constitué par les radicaux alkyle, chloroalkyle, chloroaryle, fluoroalkyle, cyanoalkyle, acryloxyaryle, acryloxyalkyle, méthacryloxyalkyle, méthacryloxypropyle ou vinyle, de manière particulièrement préférée un radical méthyle, chloropropyle, vinyle ou méthacryloxypropyle,
les R₃, identiques ou différents, représentent un radical de formule (Va) ou (Vb)
-Qₗ-X(R₈X-)_{w}-(CH₂-CH₂O-)ₓ-(C(O)-O)ₚ-(CH₂-CH(R')O-)_{y}-(C(O)-O-R" (Va)
ou
-Qₗ-X-(R₈X-)_{w}-(CH₂-CH₂O-)ₓ-(CH₂-CH(R')O-)_{y}-R"" (Vb)
avec
l = 0 ou 1,
X = indépendamment les uns des autres NR^{Z}, O ou S, de préférence NR^{Z} ou O,
R^{Z} = identiques ou différents, H ou radical alkyle, de préférence H,
Q = radical hydrocarboné bivalent de 2 à 6 atomes de carbone, de préférence Q = -CH₂-CH₂-CH₂- ou -CH₂-CH₂-, R₈ = identiques ou différents, radical hydrocarboné ramifié ou non ramifié, cyclique, saturé, insaturé, à chaîne carbonée comprenant au moins 2 atomes de carbone entre les hétéroatomes X reliés par le radical hydrocarboné, de préférence un radical hydrocarboné linéaire -CⱼH₂ⱼ- avec j ≥ 2, de préférence j = 4 à 12, avantageusement j = 6 à 10,
w = 0 à 200, de préférence 1 à 150, avantageusement 3 à 20,
x = 0 à 200, de préférence 5 à 140, avantageusement 10 à 100,
y = 0 à 200, de préférence 5 à 140, avantageusement 10 à 100,
p = 0 à 100, de préférence 1 à 20, avantageusement 2 à 10,
les constituants munis des indices w, x, y et p pouvant être agencés séquentiellement ou statistiquement,
R' = identiques ou différents, groupes alkyle ou aryle non substitués ou éventuellement substitués, par exemple substitués avec des radicaux alkyle, des radicaux aryle ou des radicaux halogénoalkyle ou halogénoaryle, contenant au total 1 à 12 atomes C, de préférence un groupe méthyle ou éthyle, avantageusement un groupe méthyle, et
R" = identiques ou différents, un groupe alkyle, de préférence de 1 à 30 atomes C, avantageusement un radical méthyle,
R"" = identiques ou différents, un radical hydrogène, un groupe alkyle de 1 à 30 atomes C, un groupe -C(O)-R"' avec R"' = radical alkyle, un groupe -CH₂-O-R', un groupe alkylaryle, tel que p. ex. un groupe benzyle, un groupe -C(O)-O-R"" avec R"" = radical alkyle ou alkylaryle, le groupe -C(O)-OR' ou le groupe -C(O)NH-R", de préférence un radical alkyle, notamment méthyle, ou acétyle,
R₇ = radical de réticulation,
à condition qu'au moins un radical R₃ qui satisfait la formule (Va) soit présent.

2. Copolymère de polysiloxane-polyéther selon la revendication 1, **caractérisé en ce que** n et n¹ représentent indépendamment l'un de l'autre 3 à 147 et (n+n¹) ≤ 150, k = 0 ou de 1 à 5,
R = un radical méthyle,
R₁ = R ou R₃,
R₂ = R ou R₃ ou un radical chloropropyle, vinyle ou méthacryloxypropyle, et au moins un radical R₃ est présent, qui est, identique ou différent, -Qₗ-X-(R₈X-)_{w}-(CH₂-CH₂O-)ₓ-(CH₂-CH(R')O-)_{y}-(C(O)-O)ₚ-R", avec l = 0 ou l = 1, et Q = -CH₂-CH₂-CH₂-,
R₈ = un radical hydrocarboné linéaire -CⱼH₂ⱼ- avec j = 4 à 12,
w = 0 ou 1 à 100,
x = 0 ou 5 à 140,
y = 0 ou 5 à 140, à condition que la somme x + y ≥ 5,
p = 1 à 10,
R' = identiques ou différents, un groupe phényle, méthyle ou éthyle, de préférence un groupe méthyle, et R" signifie un radical hydrogène ou un radical méthyle, butyle ou acétyle.

3. Copolymère de polysiloxane-polyéther selon l'une quelconque des revendications 1 ou 2, **caractérisé en ce qu'**il peut être obtenu par un procédé selon l'une quelconque des revendications 6 à 12.

4. Copolymère de polysiloxane-polyéther selon l'une quelconque des revendications 1 à 3, **caractérisé en ce que** les copolymères de polysiloxane-polyéther sont présents sous la forme de mélanges dans lesquels des copolymères de polysiloxane-polyéther qui ne comprennent pas de radicaux polyéther comprenant en tant que terminaison au moins un constituant -O-C(O)-O-R" sont également présents, et/ou sont présents dans des mélanges avec un ou plusieurs polyéthers qui ne comprennent pas d'atomes Si.

5. Copolymère de polysiloxane-polyéther selon l'une quelconque des revendications 1 à 4, **caractérisé en ce que**, dans les copolymères de polysiloxane-polyéther dans lesquels au moins un radical polyéther qui comprend en tant que terminaison au moins un constituant -O-C(O)-O-R" est présent, la proportion molaire des radicaux polyéther qui comprennent un constituant terminal -O-C(O)-O-R", par rapport au nombre total des radicaux polyéther présents dans les copolymères de polysiloxane-polyéther, est de 5 à 98 % en moles.

6. Procédé de fabrication de copolymères de polysiloxane-polyéther, **caractérisé en ce qu'**un polyorganosiloxane comprenant au moins une fonction SiH ou une fonction SiZ, avec Z = atome d'halogène, est mis en réaction avec au moins un composé organique, qui comprend au moins une fonction carbonate et au moins un autre groupe apte à la réaction avec une fonction SiH ou une fonction SiZ, et/ou tout d'abord mis en réaction avec un composé organique qui comprend une fonction OH et au moins un groupe apte à la réaction avec une fonction SiH ou une fonction SiZ, puis mis en réaction avec un carbonate de dialkyle,
en tant que polyorganosiloxane comprenant au moins une fonction SiH ou une fonction SiZ, des polyorganosiloxanes comprenant des fonctions SiH ou des fonctions SiZ terminales et/ou latérales de formule (II) étant utilisés 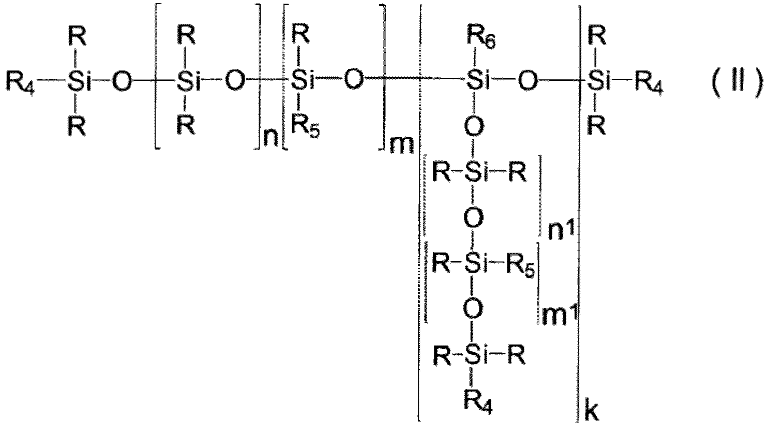 dans laquelle
n et n¹ représentent indépendamment l'un de l'autre 0 à 500, de préférence 10 à 200, notamment 15 à 100, et (n+n¹) ≤ 500, de préférence ≤ 200, notamment de > 0 à ≤ 100,
m et m¹ représentent indépendamment l'un de l'autre 0 à 60, de préférence 0 à 30, notamment 0,1 à 25, et (m+m¹) ≤ 60, de préférence ≤ 30, notamment de > 0 à ≤ 25,
k = 0 à 50, de préférence 0 à 10 et notamment 0 ou 1 à 5,
R = un radical méthyle,
R₄ = indépendamment les uns des autres hydrogène, Z ou R,
R₅ = indépendamment les uns des autres hydrogène, Z ou R,
R₆ = indépendamment les uns des autres hydrogène, Z, R ou un radical fonctionnel, organique, saturé ou insaturé, substitué avec des hétéroatomes, de préférence choisi dans le groupe constitué par les radicaux alkyle, chloroalkyle, chloroaryle, fluoroalkyle, cyanoalkyle, acryloxyaryle, acryloxyalkyle, méthacryloxyalkyle, méthacryloxypropyle ou vinyle, de manière particulièrement préférée un radical chloropropyle, vinyle ou méthacryloxypropyle,
à condition qu'au moins un des radicaux R₄, R₅ et R₆ représente un hydrogène ou Z.

7. Procédé selon la revendication 6, **caractérisé en ce qu'**en tant que composés organiques qui comprennent au moins un ou un autre groupe apte à la réaction avec une fonction SiH ou une fonction SiZ, des composés qui comprennent un groupe terminal éthényle ou éthynyle en tant que groupe apte à la réaction avec une fonction SiH sont utilisés.

8. Procédé selon la revendication 6 ou 7, **caractérisé en ce qu'**en tant que composés organiques qui comprennent au moins une fonction carbonate et au moins un autre groupe apte à la réaction avec une fonction SiH ou une fonction SiZ, des polyéthers de formule (IIIa) sont utilisés
Q'-X-(R₈X-)_{w}-(CH₂-CH₂O-)ₓ-(C(O)-Y)ₚ-(CH₂-CH(R')O-)_{y}-C(O)-O-R" (IIIa)
avec Q' = H ou CH₂=CH-(CH₂)_{q}- ou CH≡C-(CH₂)_{q}- et q = 0 ou 1, de préférence 1, p = 1 à 100, de préférence 1 à 10, R", w, x, y, R₈ et R' tels que définis dans les revendications précédentes.

9. Procédé selon au moins l'une quelconque des revendications 6 à 8, **caractérisé en ce qu'**en tant que composés organiques qui comprennent une fonction OH et au moins un autre groupe apte à la réaction avec une fonction SiH ou une fonction SiZ, des polyéthers de formule (IIIb) sont utilisés
Q'-X-(R₈X-)_{w}-(CH₂-CH₂O-)ₓ-(CH₂-CH(R')O-)_{y}-H (IIIb)
avec Q' = H ou CH₂=CH-(CH₂)_{q}- ou CH≡C-(CH₂)_{q}- et q = 0 ou 1, de préférence 1, et X, w, x, y, R₈ et R' tels que définis dans les revendications précédentes.

10. Procédé selon la revendication 8, **caractérisé en ce qu'**un polyéther de formule (IIIa) est utilisé, dans lequel Q' = CH₂=CH-CH₂-, X et Y signifient chacun O, R⁸ = un radical hydrocarboné linéaire -CⱼH₂ⱼ- avec j = 4 à 12, w = 0 ou 1 à 100, de préférence 0, x = 0 ou 5 à 140, de préférence 5 à 40, y = 0 ou 5 à 140, à condition que la somme x+y ≥ 5, p = 1 à 10, R' = un groupe méthyle ou éthyle, de préférence un groupe méthyle, et R" signifie un radical méthyle ou butyle,
ou
dans lequel Q' = H, X et Y signifient chacun O, R₈ = un radical hydrocarboné linéaire -CⱼH₂ⱼ- avec j = 4 à 12, w = 0 ou 1 à 100, de préférence 0, x = 0 ou 5 à 140, de préférence 5 à 40, y = 0 ou 5 à 140, à condition que la somme x+y ≥ 5, p = 1 à 10, R' = un groupe méthyle ou éthyle, de préférence un groupe méthyle, et R" signifie un radical hydrogène ou un radical méthyle ou butyle.

11. Procédé selon la revendication 10, **caractérisé en ce qu'**en tant que polyorganosiloxane comprenant au moins une fonction SiH ou une fonction SiZ, des polyorganosiloxanes comprenant des fonctions SiH ou des fonctions SiZ terminales et/ou latérales de formule (II) sont utilisés, dans lesquels n et n¹ représentent indépendamment l'un de l'autre 15 à 100, et (n+n¹) ≤ 100, k = 0 ou de 1 à 5, R = un radical méthyle, et R₆ = R ou un radical chloropropyle, vinyle ou méthacryloxypropyle.

12. Utilisation de copolymères de polysiloxane-polyéther selon l'une quelconque des revendications 1 à 5 ou fabriqués selon l'une quelconque des revendications 6 à 11 en tant que stabilisateurs de mousse lors de la fabrication de mousses de polyuréthane, lors de la fabrication de plastiques à base de polyuréthane, en tant que tensioactifs pour l'extraction par CO₂ liquide, en tant que substance tensioactive pour le nettoyage à sec ou en tant qu'émulsifiant pour applications cosmétiques.

13. Utilisation selon la revendication 12, **caractérisée en ce que** du CO₂ est utilisé en tant qu'agent gonflant lors de la fabrication des mousses de polyuréthane.

14. Utilisation selon la revendication 12 ou 13, **caractérisée en ce que** des polyéther-carbonate-polyols sont utilisés lors de la fabrication des mousses de polyuréthane.

15. Mousse de polyuréthane, contenant au moins un copolymère de polysiloxane-polyéther selon l'une quelconque des revendications 1 à 5 ou fabriqué selon l'une quelconque des revendications 12 à 14.

16. Utilisation de mousses de polyuréthane selon la revendication 15 en tant qu'isolation de réfrigérateur, panneau isolant, élément en sandwich, isolation de tuyauterie, mousse pulvérisée, mousse en boîte à 1 et 1,5 composant, imitation de bois, mousse de modèle, mousse d'emballage, matelas, rembourrage de meuble, rembourrage de siège automobile, appuie-tête, tableau de bord, garnissage intérieur d'automobile, toit d'automobile, matériau d'absorption sonore, volant, semelle de chaussure, mousse pour l'arrière de tapis, mousse filtrante, mousse d'étanchéité et adhésif ou pour la fabrication des produits correspondants.
